# EUROPÄISCHE PATENTSCHRIFT

(11) **EP 4 264 760 B1**
(45) Veröffentlichungstag und Bekanntmachung des Hinweises auf die Patenterteilung: **13.11.2024**
(21) Anmeldenummer: 21805904.6
(22) Anmeldetag: 02.11.2021
(51) Int. Cl.: H02B 1/28

(54) **EXPLOSIONSGESCHÜTZTES GEHÄUSE MIT HERAUSNEHMBARER MITTELSTREBE**
EXPLOSION PROOF HOUSING WITH REMOVABLE CENTRAL BEAM
BOÎTIER ANTIDÉFLAGRANT AVEC RENFORT CENTRAL AMOVIBLE

(30) Priorität: 15.12.2020 DE 102020133606
(43) Veröffentlichungstag der Anmeldung: 25.10.2023
(73) Patentinhaber: R. STAHL Schaltgeräte GmbH, 74638 Waldenburg (DE)
(72) Erfinder: KONDRUS, Elena, 74653 Künzelsau (DE); SEMRAU, Holger, 74589 Satteldorf (DE)
(74) Vertreter: Rüger Abel Patentanwälte PartGmbB
(86) Internationale Anmeldenummer: PCT/EP2021/080383
(87) Internationale Veröffentlichungsnummer: WO 2022/128231

(56) Entgegenhaltungen:
- CN-U- 202 712 771
- CN-U- 205 248 634
- CN-U- 208 874 129
- DE-A1- 102019 102 832

## Beschreibung

Die Erfindung betrifft ein explosionsgeschütztes Gehäuse, bei dem zwischen dem Gehäuseinnenraum und der Umgebung vorhandene Öffnungen und Spalte so eng und so lang sind, dass Flammen, Funken oder glühende Partikel aus dem Gehäuse nicht in die Umgebung gelangen können. Diese Gehäuse genügen der Zündschutzart druckfeste Kapselung (Ex d), z.B. gemäß einer der Normen EN 60079-1 oder IEC 60079-1.

Explosionsgeschützte Gehäuse dienen in explosionsgefährdeten Atmosphären dazu, mögliche Zündquellen, die eine explosionsgefährdete Atmosphäre zünden können, geschützt in einem Innenraum des explosionsgeschützten Gehäuses unterzubringen. Als Zündquelle kann beispielsweise eine elektrische und/oder elektronische Einrichtung dienen. Eine solche Einrichtung kann auch in einem explosionsgefährdeten Bereich sicher im Innenraum des explosionsgeschützten Gehäuses betrieben werden.

Derartige explosionsgeschützte Gehäuse sind an sich bekannt. Beispielsweise beschreibt EP 1 107 656 A2 ein explosionsgeschütztes Gehäuse in der Zündschutzart druckfeste Kapselung (Ex d). Das Gehäuse hat einen Gehäusekörper mit einer Gehäuseöffnung. An einer Anlagefläche, die die Gehäuseöffnung umgibt, kann ein Deckel des explosionsgeschützten Gehäuses aufgelegt werden. Mittels einer Klammer kann eine Klemmverbindung zwischen dem Deckel und dem Gehäusekörper hergestellt werden.

Ferner ist aus der US 4 180 177 A ein explosionsgeschütztes Gehäuse bekannt, das eine Gehäuseöffnung aufweist, die mittels eines schwenkbaren Deckels verschließbar ist. Im geschlossenen Zustand des Deckels ist dieser mittels Schrauben an dem Gehäusekörper gesichert, um den Innenraum des explosionsgeschützten Gehäuses gegenüber der Umgebung zünddurchschlagssicher abzudichten.

Derartige explosionsgeschützte Gehäuse haben sich in der Praxis bewährt. In der Regel erfolgt der Anschluss von Gehäuseteilen druckfester Gehäuse aneinander über einen Flachspalt. Auf diese Weise kann ein druckfestes Gehäuse mittels eines Deckels geschlossen werden, der umlaufend ununterbrochen über einen Flachspalt an das Gehäuse angeschlossen ist. Lange und enge Flachspalte können sicherstellen, dass keine Zündfunken, Flammen, heiße, zündfähige Gase oder dergleichen aus dem Innenraum des Gehäuses entweichen und zur Zündung der umgebenden explosionsgefährdeten Atmosphäre führen können.

Die Gehäuseöffnung ist in der Regel relativ groß, um das Anordnen der elektronischen und/oder elektrischen Einrichtungen in dem Innenraum durch die Gehäuseöffnung hindurch zu ermöglichen. Dies führt wiederum dazu, dass ein die Gehäuseöffnung verschließender Deckel, der dem Explosionsdruck im Innenraum des Gehäuses standhalten muss, groß und schwer sein kann. Dadurch wird die Handhabung des Deckels bei der Montage der elektrischen und/oder elektronischen Einrichtung oder anderer Einbauten im Gehäuse schwierig. Beispielsweise sind bei schwenkbaren Deckeln aufwändige Scharniere erforderlich, die den großen und schweren Deckel halten müssen und einen ausreichenden Schwenkbereich gewährleisten müssen, um den Zugang zu dem Gehäuseinnenraum durch die Gehäuseöffnung zu gewährleisten, wenn sich der Deckel in der geöffneten Position befindet. Das Gewicht und die Handhabung des Deckels können abhängig von der Ausführung des Gehäuses weiter erschwert werden, wenn im Deckel Einbauten und/oder Bedienelemente zur Bedienung der elektrischen und/oder elektronischen Einrichtungen, wie z.B. Anzeigeeinrichtungen, Schalter, Knöpfe, berührungsempfindliche Flächen bzw. Monitore oder ähnliches, vorhanden sind.

Um diese Probleme zu vermeiden oder zu verringern, sind druckfest gekapselte Gehäuse entwickelt worden, die zwei oder mehrere nebeneinanderliegende Deckel aufweisen, die geöffnet werden können, um Zugang zu dem Innenraum des explosionsgeschützten Gehäuses zu schaffen. Das Gehäuse muss im Bereich der Zugangsöffnung eine entsprechende integrale Strebe aufweisen, an die die Deckel unter Ausbildung eines zünddurchschlagssicheren Spaltes angelegt und gesichert werden können.

Beispielsweise beschreibt die CN 202712771 U ein explosionsgeschütztes Gehäuse mit einem Gehäusekörper, der eine Gehäuseöffnung definiert, die durch eine Mittelstrebe des Gehäusekörpers in zwei Öffnungsabschnitte unterteilt und von einem Flansch des Gehäusekörpers umschlossen ist. An der Mittelstrebe und dem Flansch können zwei Deckel angebracht werden, um die Gehäuseöffnung zünddurchschlagssicher zu verschließen.

Druckfest gekapselte Gehäuse mit mehreren gesonderten Deckeln und wenigstens einer integralen Strebe an dem Gehäuse sind relativ schwierig herzustellen, zu montieren und zu verwenden. In herkömmlichen Konstruktionen ist die integrale Strebe fest gefügt, indem sie z.B. an den die Gehäuseöffnung umgebenden Gehäuserahmen oder Gehäuseflansch angeschweißt ist, so dass ihre Spaltfläche in der gleichen Ebene liegt wie die Ebene der umgebenden Gehäusespaltfläche, die die Gehäuseöffnung umgibt. Die umlaufende Gehäusespaltfläche und die Spaltfläche der Strebe müssen nach dem Fügen gemeinsam durch Fräsen, Schleifen oder andere geeignete Bearbeitungsmethoden auf eine für das angestrebte Spaltmaß geeignete Ebenheit nachbearbeitet werden. Dies kann mehrere Bearbeitungsvorgänge erfordern und somit jedenfalls aufwändig und langwierig sein. Die mit dem Gehäuse fest verbundene Strebe behindert außerdem den freien Zugang zu dem Gehäuse und schränkt die gesamte Zugangsöffnung ein.

Um diese Nachteile zu beseitigen, wird in der DE 10 2019 102 832 vorgeschlagen, ein Rahmenteil vorzusehen, das an dem Gehäusekörper lösbar befestigt wird und das einen Umfangssteg, der die Gehäuseöffnung umgibt, und einen Mittelsteg aufweist, der sich innerhalb des Umfangsstegs erstreckt und die Gehäuseöffnung in wenigstens zwei Öffnungsabschnitte unterteilt. Es sind wenigstens zwei separate Deckel vorgesehen, die in einer Schließstellung jeweils an dem Umfangssteg und an dem Mittelsteg anliegen, so dass zwischen dem Deckel und dem Rahmenteil ein zünddurchschlagssicherer Spalt gebildet ist. Bei der Montage des Gehäuses kann das Rahmenteil vorerst weggelassen oder von dem Gehäuse entfernt werden, um eine große Zugangsöffnung zu dem Innenraum des Gehäuses zu schaffen, durch die auch große elektrische und elektronische Einrichtungen in den Innenraum des Gehäuses eingebracht werden können. Erst anschließend werden das Rahmenteil und die Deckel an dem Gehäusekörper befestigt, um das Gehäuse zu verschließen und die zünddurchschlagssicheren Spalte zu bilden.

Allerdings muss das Rahmenteil relativ stabil ausgebildet sein. Insbesondere muss der integrale Mittelsteg des Rahmenteils relativ massiv und dick sein, wenn die Deckel an den Mittelsteg angelegt und zünddurchschlagssicher beispielsweise mit Schraubenbolzen gesichert werden sollen. Ein derartiges Rahmenteil kann ein beträchtliches Gewicht aufweisen, schwierig herzustellen und wegen der Größe und des Gewichts schwer zu handhaben sein.

CN 208 874 129 U offenbart ein explosionsgeschütztes Gehäuse mit einem Gehäusekörper, einer in dem Innenraum des Gehäusekörpers angeordneten Mittelstrebe, die die Gehäuseöffnung in wenigstens zwei Öffnungsabschnitte unterteilt, und zwei separaten Gehäusedeckeln, die über Scharniere an dem Gehäusekörper schwenkbar montiert sind, um die Gehäuseöffnung freigeben und verschließen zu können. Die Mittelstrebe ist an dem Gehäusekörper angeschweißt. Auf der nach außen weisenden Fläche der Mittelstrebe und an den Innenkonturen der Gehäusedeckel sind Dichtungsgummiringe angebracht, um die Gehäusespalte abzudichten.

CN 205 248 634 U offenbart ein explosionsgeschütztes Gehäuse, das die Merkmale des Oberbegriffs des Patentanspruchs 1 aufweist.

Ausgehend hiervon ist es eine Aufgabe der Erfindung, ein explosionsgeschütztes Gehäuse zu schaffen, das einen einfachen Aufbau aufweist, relativ einfach zu montieren ist und den Einbau elektrischer und/oder elektronischer Einrichtungen und sonstiger großer Einbauten in dem Innenraum des explosionsgeschützten Gehäuses erleichtert.

Diese Aufgabe wird durch ein explosionsgeschütztes Gehäuse mit den Merkmalen des Patentanspruches 1 gelöst.

Das explosionsgeschützte Gehäuse gemäß der Erfindung ist insbesondere ein Gehäuse der Zündschutzart "druckfeste Kapselung" (Ex d) und weist einen Gehäusekörper, wenigstens eine Mittelstrebe und wenigstens zwei separate Deckel auf. Der Gehäusekörper begrenzt einen Innenraum und weist eine Gehäuseöffnung, die Zugang zu dem Innenraum bietet, und eine umlaufende Gehäusespaltfläche auf, die die Gehäuseöffnung umgibt. Die wenigstens eine Mittelstrebe ist an dem Gehäusekörper lösbar montierbar, so dass sie als solche individuell aus dem Gehäusekörper herausgenommen werden kann, während sie sich im montierten Zustand zwischen Abschnitten der umlaufenden Gehäusespaltfläche erstreckt und die Gehäuseöffnung in wenigstens zwei Öffnungsabschnitte unterteilt. Im montierten Zustand ist die wenigstens eine Mittelstrebe an dem Gehäusekörper lose gelagert, ohne an dem Gehäusekörper direkt fixiert zu sein. Die Mittelstrebe weist wenigstens eine Mittelstrebenspaltfläche auf. Die wenigstens zwei separaten Deckel sind eingerichtet und angeordnet, um jeweils im geschlossenen Zustand an dem Gehäusekörper und der Mittelstrebe derart gesichert zu werden, dass zwischen den Deckeln und dem Gehäusekörper an der umlaufenden Gehäusespaltfläche sowie zwischen den Deckeln und der Mittelstrebe an der wenigstens einen Mittelstrebenspaltfläche zünddurchschlagsichere Spalte gebildet sind.

Die Erfindung basiert auf der Idee, die Strebe derart lösbar zu montieren, dass diese für Montagearbeiten schnell und einfach aus dem Gehäuse entfernt werden kann. Dies erleichtert wesentlich den Einbau großer elektrischer und elektronischer Einrichtungen oder sonstiger Einbauten in dem Innenraum des Gehäuses. Außerdem wird erfindungsgemäß sichergestellt, dass die Spaltebene der wenigstens einen Mittelstrebe nicht durch aufwändiges Justieren auf die gleiche Ebene der umlaufenden Gehäusespaltfläche gebracht werden muss. All dies wird durch die vorteilhafte lose Lagerung der wenigstens einen Mittelstrebe ermöglicht.

Das explosionsgeschützte Gehäuse kann ein kastenartiges Gehäuse sein, das einen beispielsweise quaderförmig konturierten Innenraum definiert, oder es kann auch eine zylindrische oder polygonale oder sonstige geeignete Querschnittskontur aufweisen. Mehrere Gehäusewände des explosionsgeschützten Gehäuses können durch Schraub-, Klebe-, Schweißverbindung oder eine sonstige Verbindungsart miteinander verbunden sein, die einem etwaigen Explosionsdruck im Innenraum des Gehäuses standhält und keine Flammen, Funken oder zündfähigen Gase aus dem Innenraum nach außen entweichen lässt. In dem Innenraum lassen sich die elektrischen oder elektronischen Einrichtungen oder sonstige Einbauten montieren, die im Betrieb Funken oder eine Zündquelle bilden können.

Es können mehrere derartige Mittelstreben und mehrere Deckel, insbesondere eine der Anzahl der gebildeten Öffnungsabschnitte entsprechende Anzahl von Deckeln, vorgesehen sein. Die Deckel müssen nicht notwendigerweise nebeneinanderliegen, sondern können auch übereinander oder in sonstiger relativen Positionierung zueinander angeordnet sein.

Es ist vorteilhaft, wenn die umlaufende Gehäusespaltfläche einen ersten der zünddurchschlagsicheren Spalte definiert und die wenigstens eine Mittelstrebenspaltfläche einen zweiten der zünddurchschlagsicheren Spalte definiert und der erste und der zweite zünddurchschlagsichere Spalt Flachspalte sind, die in einer gemeinsamen Ebene liegen. Dies ermöglicht eine einfache Gestaltung und Herstellung des Gehäuses und einen sicheren, effektiven Explosionsschutz.

Vorteilhafterweise kann die wenigstens eine Mittelstrebe eingerichtet sein, um bei der losen Lagerung an dem Gehäusekörper auch beweglich gehaltert zu sein. Es sind keine Fixiermittel zur direkten Sicherung der wenigstens einen Mittelstrebe an dem Gehäusekörper vorgesehen, sowohl wenn sich die Deckel im geschlossenen Zustand befinden, als auch wenn sie sich im geöffneten Zustand befinden. Eine derartige lose Lagerung und bewegliche Halterung der Mittelstrebe erleichtert die Handhabung, vor allem die Montage und Demontage, und bietet die Basis dafür, dass keine aufwändige Justage oder Bearbeitung der Mittelstrebe erforderlich ist, um die wenigstens eine Mittelstrebenspaltfläche in gleiche Ebene wie die umlaufende Gehäusespaltfläche zu bringen.

Die erfindungsgemäße Mittelstrebe ist auch kein integraler Teil eines Zwischenrahmens, der an dem Gehäusekörper befestigt wird, um einen Mittelsteg zur Sicherung der Deckel bereitzustellen. Vielmehr ist die Mittelstrebe ein länglicher Balken oder Träger, der massiv, im Querschnitt vorzugsweise rechteckig oder quadratisch oder auch als ein Rechteckrohr, Vierkantrohr oder Profil, z.B. ein C-Profil, ausgebildet sein kann.

Es kann eine Lagereinrichtung vorgesehen sein, die ein erstes Lagerelement an der Mittelstrebe und ein damit zusammenwirkendes zweites Lagerelement an dem Gehäusekörper aufweisen kann. Das erste Lagerelement und das zweite Lagerelement wirken derart zusammen, dass die Mittelstrebe an dem Gehäusekörper lose gelagert und beweglich gehaltert wird und von dem Gehäusekörper jederzeit schnell und einfach gelöst werden kann, ohne irgendeine feste Verbindung zwischen der Mittelstrebe und dem Gehäusekörper lösen zu müssen.

In vorteilhaften Ausführungsformen kann eines von dem ersten und zweiten Lagerelement eine Lasche umfassen, die an einem von der wenigstens einen Mittelstrebe und dem Gehäusekörper vorgesehen und mit einem Langloch ausgebildet ist, während das andere von dem ersten und zweiten Lagerelement ein Eingriffselement, vorzugsweise einen Bolzen, umfasst, das bei einer Montage der wenigstens einen Mittelstrebe an dem Gehäusekörper in dem Langloch verschiebbar aufgenommen wird. Beispielsweise kann die Lasche mit dem Langloch an der Mittelstrebe und das Eingriffselement an dem Gehäusekörper vorgesehen sein oder umgekehrt.

In besonders bevorzugten Ausführungsformen weist die wenigstens eine Mittelstrebe an jedem ihren Längsende zwei im Wesentlichen L-förmige Laschen auf, die auch als L-Winkel oder L-Profile bezeichnet werden können, deren ein Schenkel an jeweils einer Seitenfläche der wenigstens einen Mittelstrebe angebracht ist und deren anderer Schenkel das Langloch aufweist. An dem Gehäusekörper können Bolzen ausgebildet sein, die die Eingriffsmittel bilden, die jeweils mit einem zugehörigen Langloch zusammenwirken, um die wenigstens eine Mittelstrebe lose zu lagern und beweglich zu halten. Es sind an beiden Seiten der Mittelstrebe, zu beiden Seiten der Mittelstrebenspaltfläche, derartige Laschen mit Langlöchern vorgesehen, die auf Bolzen an dem Gehäusekörper lose aufgesteckt werden können. Die Montage erfolgt mit einfachen Mitteln, schnell und unter geringem Aufwand.

In einem Ausführungsbeispiel kann das Langloch einen einzigen Langlochabschnitt aufweisen, der ein offenes Ende aufweist und sich in eine Richtung senkrecht zu der Mittelstrebenspaltfläche erstreckt. Der Langlochabschnitt ist hinreichend breit und lang ausgelegt, um eine relative Verschiebung zwischen dem Langloch und dem zugehörigen Bolzen mit Spiel zu ermöglichen. Die Montage ist besonders einfach, weil die Mittelstrebe lediglich mit ihren Langlöchern auf die zugehörigen Bolzen aufgesteckt und durch eine einzige Bewegung der Mittelstrebe senkrecht zu der Gehäuseöffnung in eine Position überführt werden kann, in der die Deckel geschlossen und an der Mittelstrebe gesichert werden können. Die Mittelstrebe ist aber an dem Gehäusekörper in keiner Weise gesichert und könnte sich, solange die Deckel nicht geschlossen und gesichert sind, versehentlich von dem Gehäusekörper lösen, wenn sie z.B. von einer unachtsamen Person angestoßen wird.

In bevorzugten Ausführungsformen weist deshalb jedes Langloch zwei oder mehrere Langlochabschnitte auf, die unter Ausbildung einer Biegung miteinander verbunden sind und die jeweils hinreichend breit und lang ausgelegt sind, um eine relative Verschiebung zwischen dem Langloch und dem zugehörigen Bolzen oder sonstigen Eingriffsmittel zu ermöglichen. Beispielsweise kann ein Langlochabschnitt mit einem offenen Ende zum Aufstecken der Mittelstrebe auf den zugehörigen Bolzen dienen, während wenigstens ein weiterer Langlochabschnitt den Bolzen in der Endposition aufnimmt, in der die Deckel geschlossen und gesichert werden können. Die wenigstens eine Biegung zwischen den Langlochabschnitten verhindert, dass sich die lose gelagerte Mittelstrebe relativ leicht versehentlich von dem Gehäusekörper lösen kann.

In einer besonders bevorzugten Ausführungsform weist jedes Langloch in jeder der L-förmigen Laschen der Mittelstrebe einen ersten Langlochabschnitt, der der senkrecht zu der Mittelstrebenspaltfläche ausgerichtet ist und ein offenes Ende aufweist, um ein Aufstecken des Langlochs auf den zugehörigen Bolzen zu ermöglichen, einen zweiten Langlochabschnitt, der zu dem ersten Langlochabschnitt parallel und versetzt angeordnet ist und eine Länge aufweist, die eine begrenzte Bewegung der Mittelstrebe senkrecht zu der Gehäuseöffnung in der Endposition zulässt, und einen dritten Langlochabschnitt auf, der den ersten Langlochabschnitt mit dem zweiten Langlochabschnitt verbindet. Diese Ausgestaltung bietet sowohl eine einfache Handhabung bei der Montage und Demontage als auch eine hohe Sicherheit bei der losen Lagerung der Mittelstrebe an dem Gehäusekörper.

Es kann eine Spanneinrichtung mit Spannmitteln vorgesehen sein, die eingerichtet ist, um die Deckel an dem Gehäusekörper und der wenigstens einen Mittelstrebe festzuspannen und festzuhalten und die zünddurchschlagssicheren Spalte aufrechtzuerhalten. Als Spannmittel können bevorzugterweise Schraubmittel verwendet werden, wobei dann in dem Gehäusekörper und der Mittelstrebe Innengewinde eingeformt sein können, in die durch die Deckel durchgesteckte Schraubenbolzen eingeschraubt werden können. Die Innengewinde könnten auch in einer an dem Gehäusekörper und/oder der Mittelstrebe befestigten, z.B. angeschweißten, angeklebten oder in sonstiger Weise angefügten Innengewindehülse ausgebildet sein. Durch Festziehen der Spannmittel werden die zünddurchschlagssicheren Spalte sowohl an der umlaufenden Gehäusespaltfläche als auch an der wenigstens einen Mittelstrebenspaltfläche geschaffen und aufrechterhalten. Scharniere oder andere Gelenke, die die Deckel beispielsweise verschwenkbar an dem Gehäusekörper lagern, können mit verhältnismäßig großem Spiel behaftet sein, das beim Verspannen der Deckel mittels der Spannmittel beseitigt wird.

Außer Schrauben können auch andere Spannmittel, wie beispielsweise Spannklammern, Schnellspannverschlüsse oder andere Schließmechanismen oder Befestigungsmittel, Klemm- oder Haltemittel verwendet werden, um die Deckel in fester Verbindung mit dem Gehäusekörper zu halten. Auch im Falle einer impulsartigen Drucksteigerung in dem Gehäuse kann sichergestellt werden, dass die Spaltweite der zünddurchschlagssicheren Spalte wenige Hundertstel Millimeter nicht übersteigt, jedenfalls kein Spaltmaß erreicht, das einen Zünddurchschlag zulassen würde.

Die Spannmittel zur Befestigung der Deckel an dem Gehäusekörper und der Mittelstrebe dienen nicht dem direkten festen Fixieren der Mittelstrebe an dem Gehäusekörper. Das zünddurchschlagssichere Gehäuse ist frei von derartigen Spann-, Klemm- oder sonstigen Fixiermitteln, die eine direkte Fixierung der Mittelstrebe an dem Gehäusekörper erbringen würden. Es sind keine derartigen Fixiermittel vorhanden.

Vorteilhafterweise kann die wenigstens eine Mittelstrebe derart an dem Gehäusekörper lose gelagert sein, dass sie beim Festspannen der Deckel an der wenigstens einen Mittelstrebe mittels der Spanneinrichtung, wenn die Deckel an die Mittelstrebe angelegt sind und gesichert werden, zu den Deckeln hin gezogen und bewegt werden kann, um die Mittelstrebenspaltfläche mit einer Gegenanlagefläche an den Deckeln oder einem zwischen der Mittelstrebe und den Deckeln eingefügten Zwischenrahmen in Anlage und mit der umlaufenden Gehäusespaltfläche in gleiche Ebene zu bringen. Beispielsweise können in Ausführungsformen, die die L-förmigen Laschen mit Langlöchern verwenden, die Langlöcher in dem Langlochabschnitt, der in der Endposition der Mittelstrebe wirksam ist, mit einer derartigen Länge und Breite eingerichtet sein, dass die Mittelstrebe allein durch das Festziehen der Spannmittel, z.B. Schraubenbolzen, entlang des Langlochabschnitts zu dem Deckel hin verschoben wird, bis sie mit der Spaltfläche des Deckels oder eines Zwischenrahmens in Anlage gelangt und dazwischen der zünddurchschlagssichere Spalt entsteht. Die Mittelstrebe ist so zur Selbstjustage eingerichtet, indem sie sich automatisch selbst passend positioniert, wenn der Deckel an der Mittelstrebe fixiert wird. Aufwändige Justagevorgänge und Bearbeitungen an der Mittelstrebe können entfallen.

In einer Weiterbildung der Erfindung kann das explosionsgeschützte Gehäuse ferner einen Zwischenrahmen aus einem dünnen, leicht elastischen Blech aufweisen, der an dem Gehäusekörper lösbar befestigt ist und der einen Umfangssteg, der die Gehäuseöffnung umgibt und unter Ausbildung des ersten zünddurchschlagssicheren Spaltes an der Gehäusespaltfläche anliegt, und wenigstens einen Mittelsteg aufweist, der sich innerhalb des Umfangsstegs erstreckt und die wenigstens eine Mittelstrebe überdeckt und unter Ausbildung des zweiten zünddurchschlagssicheren Spaltes an der wenigstens einen Mittelstrebenspaltfläche anliegt, wobei zwischen jedem Deckel und dem Zwischenrahmen ein zünddurchschlagssicherer Spalt gebildet ist. Ein derartiger Zwischenrahmen kann in einem Stück, integral mit dem Umfangssteg und dem Mittelsteg ausgebildet, aus einem dünnen Metallblech gefertigt sein, wobei keine besonders hohe Bearbeitungspräzision für den Zwischenrahmen erforderlich ist. Vielmehr kann vorteilhafterweise die Flexibilität des relativ dünnen, standardmäßig gefertigten Blechs genutzt werden, um die enge Schießung der Spalte an beiden Seiten des Zwischenrahmens zu gewährleisten, was ein hohes Maß an Bearbeitungsfreiheit ermöglicht. Wenn der dünne Zwischenrahmen zwischen den Deckeln und dem Gehäusekörper und der Mittelstrebe eingefügt ist, werden nach Schließung und Fixierung der Deckel optimale vorbestimmte zünddurchschlagssichere Flachspalte in definierten Ebenen und mit definierten Spaltdimensionen erhalten, ohne dass hierzu irgendeine aufwändige Justage erforderlich ist.

Der dünne Zwischenrahmen kann eine Dicke von weniger als 10 mm, vorzugsweise weniger als 5 mm, in bevorzugten Ausführungsformen eine Dicke von etwa 3-4 mm aufweisen. Dies hat einen geringen Materialaufwand und ein geringes Gewicht des Zwischenrahmens zur Folge, was auch die Handhabung vereinfacht. Die Dicke wird senkrecht zu den Spaltflächen des Zwischenrahmens gemessen. Das dünne Zwischenrahmenblech kann sich mit seinen Spaltflächen eng an die Spaltflächen der Deckel, des Gehäusekörpers und der Mittelstrebe anlegen und die gewünschten zünddurchschlagssicheren Spalte bilden.

Ein derartiger dünner Zwischenrahmen lässt sich besonders vorteilhaft in Verbindung mit der lose gelagerten Mittelstrebe verwenden. An fest angebrachten Mittelstreben wäre er weniger sinnvoll oder sicher, weil es am Übergang zwischen dem dünnen Zwischenrahmenblech und der massiven Mittelstrebe leicht zu Verformungen kommen könnte, die die Spaltdimension negativ beeinflussen könnten. Dies wird durch die Trennung von dünnem Zwischenrahmenblech mit dem dünnen Mittelsteg und der Mittelstrebe und die lose Lagerung der Mittelstrebe vermieden. Beim Festspannen der Deckel und des Zwischenrahmens an dem Gehäusekörper und der Mittelstrebe wird sich die Mittelstrebe sanft und gleichmäßig gegen den dünnen Zwischenrahmen anlegen, so dass keine Verformungen des Zwischenrahmens entstehen und ein minimaler Spalt mit gleichmäßiger Dimension entlang der gesamten Mittelstrebenspaltfläche entsteht.

In der Ausführungsform mit dem dünnen Zwischenrahmen kann eine Spanneinrichtung vorgesehen sein, die eingerichtet ist, um den Zwischenrahmen in Anlage an dem Gehäusekörper und der wenigstens einen Mittelstrebe festzuspannen und festzuhalten und den zünddurchschlagssicheren Spalt dazwischen aufrechtzuerhalten und um die Deckel in Anlage an dem Umfangssteg und dem wenigstens einen Mittelsteg des Zwischenrahmenblechs festzuspannen und festzuhalten und den zünddurchschlagssicheren Spalt dazwischen aufrechtzuerhalten. Wenigstens einige, vorzugsweise die meisten oder sogar alle der Spannmittel der Spanneinrichtung können dabei sowohl den Zwischenrahmen als auch den jeweiligen Deckels fixieren.

Weitere vorteilhafte Ausgestaltungen der Erfindung ergeben sich aus den abhängigen Ansprüchen, der Beschreibung und den Zeichnungen. Nachfolgend werden bevorzugte Ausführungsbeispiele der Erfindung anhand der beigefügten Zeichnungen im Einzelnen erläutert. Es zeigen:
Figur 1 eine Perspektivansicht eines Ausführungsbeispiels eines explosionsgeschützten Gehäuses im geschlossenen Zustand;
Figur 2 eine Perspektivansicht des explosionsgeschützten Gehäuses nach Figur 1 im geöffneten Zustand;
Figur 3 eine Vorderansicht des explosionsgeschützten Gehäuses nach Figur 1 in geöffnetem Zustand und mit herausgenommener Mittelstrebe, in vereinfachter Darstellung;
Figur 4 eine Perspektivansicht einer in dem explosionsgeschützten Gehäuse eingesetzten lose gelagerten Mittelstrebe;
Figur 5 die Mittelstrebe nach Figur 4 in Draufsicht von oben mit an dieser angebrachten Laschen;
Figur 6 den Ausschnitt Z aus Figur 2 unter Veranschaulichung der Schnittstelle zwischen einem Gehäusekörper und der Mittelstrebe des explosionsgeschützten Gehäuses, in einer vergrößerten Perspektivansicht;
Figuren 7a-7c Montageansichten zur Veranschaulichung der Montage der Mittelstrebe an dem Gehäusekörper in vereinfachten Perspektivdarstellungen ähnlich Figur 6;
Figur 8 das explosionsgeschützte Gehäuse nach Figur 1 in Draufsicht von oben;
Figur 9 das Gehäuse nach Figur 1 in einer Vorderansicht, mit besonderer Darstellung der zünddurchschlagsicheren Spalte;
Figur 10 eine Querschnittsansicht eines Ausschnitts der Schnittstelle zwischen Deckeln und der Mittelstrebe des explosionsgeschützten Gehäuses nach Figur 1 im geschlossenen Zustand unter Darstellung der dazwischen gebildeten zünddurchschlagsicheren Spalte und der Lagereinrichtung für die Mittelstrebe;
Figuren 11a und 11b weitere Ausführungsformen einer Lagereinrichtung zur losen Lagerung der Mittelstrebe an dem Gehäusekörper des explosionsgeschützten Gehäuses, in stark vereinfachter Perspektivdarstellung;
Figur 12 eine Explosionsdarstellung einer weiteren Ausführungsform eines explosionsgeschützten Gehäuses, die einen Zwischenrahmen verwendet;
Figur 13 eine Perspektivansicht des Zwischenrahmens des Gehäuses nach Figur 12, in vereinfachter Darstellung;
Figur 14 eine Vorderansicht des Gehäuses nach Figur 12 im geöffneten Zustand mit Blick auf den Zwischenrahmen unter Weglassung der Deckel des Gehäuses;
Figur 15 das explosionsgeschützte Gehäuse nach Figur 12 in Draufsicht von oben; und
Figur 16 eine Querschnittsansicht eines Ausschnitts der Schnittstelle, die die Deckel, den Zwischenrahmen und die Mittelstrebe des Gehäuses nach Figur 12 umfasst, in vereinfachter Darstellung ähnlich der Figur 10, unter Veranschaulichung der zünddurchschlagssicheren Spalte und der Lagereinrichtung für die Mittelstrebe.

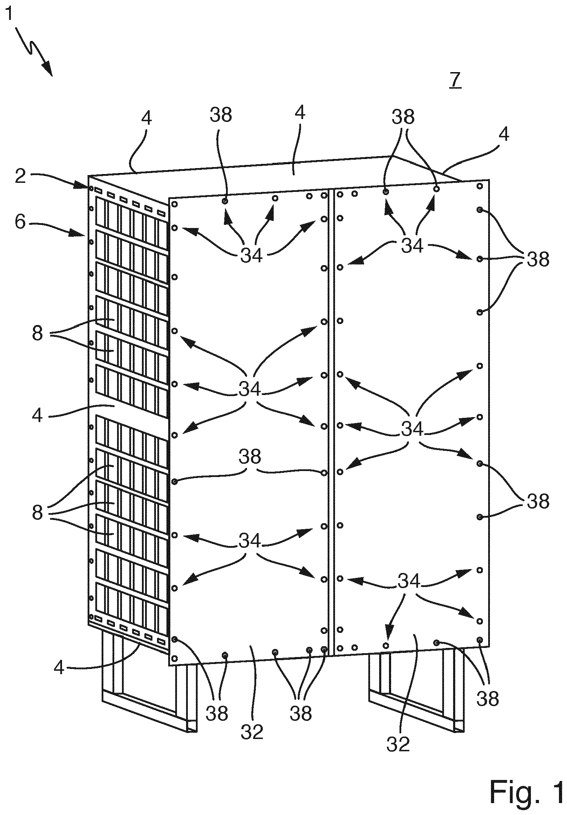

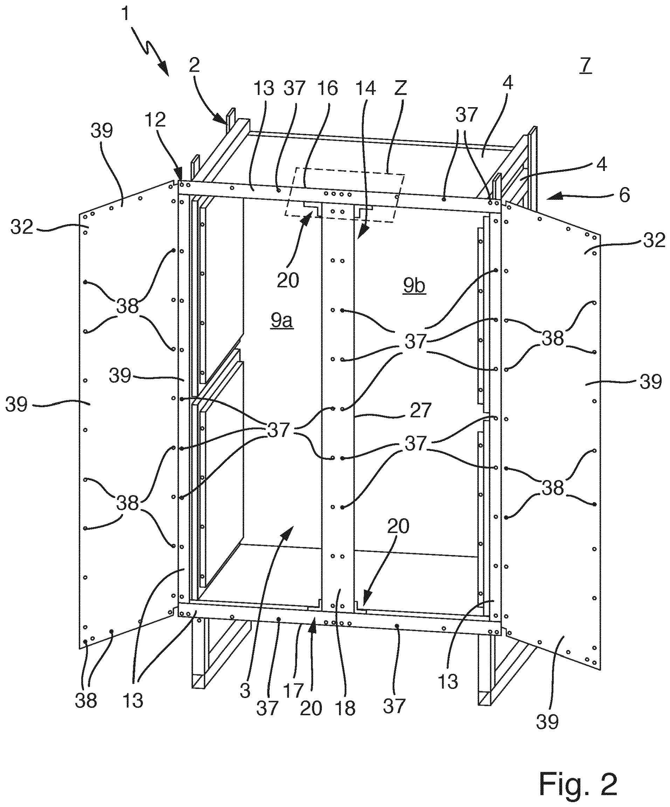

In den Figuren 1 und 2 ist jeweils eine perspektivische Darstellung einer beispielhaften Ausführungsform eines explosionsgeschützten Gehäuses 1 veranschaulicht. Das explosionsgeschützte Gehäuse 1 weist einen Gehäusekörper 2 auf, der einen Innenraum 3 begrenzt. Der Gehäusekörper 2 weist hierfür mehrere Gehäusewände 4 auf, die miteinander verbunden sind. Die Gehäusewände 4 können beispielsweise durch eine Schraubverbindung, eine Klebeverbindung, eine Schweißverbindung, eine Kombination dieser Verbindungsarten oder eine andere geeignete Verbindungsart miteinander verbunden sein, die einem etwaigen Explosionsdruck in dem Innenraum 3 standhält und keine Flammen, Funken oder heißen zündfähigen Gase oder dergleichen aus dem Innenraum 3 entweichen lässt. Beispielsweise kann der Gehäusekörper 2 im Wesentlichen kastenförmig ausgebildet sein und fünf Gehäusewände 4 aufweisen, die einen quaderförmig konturierten Innenraum 3 begrenzen.

In Abwandlung zum dargestellten Ausführungsbeispiel kann der Gehäusekörper 2 auch hohlzylindrisch sein oder eine polygonale Querschnittskontur aufweisen. Die Form des Gehäusekörpers 2 ist im Prinzip frei wählbar.

In einer oder mehreren Gehäusewänden 4 kann eine Druckentlastungseinrichtung 6 angeordnet sein, um einen Gasströmungskanal zwischen dem Innenraum 3 und einer Umgebung 7 außerhalb des explosionsgeschützten Gehäuses 1 bereitzustellen. Der wenigstens eine Gasströmungskanal der Druckentlastungseinrichtung 6 ist derart ausgestaltet, dass keine zündfähigen Gase, Funken oder Flammen aus dem Innenraum 3 in die Umgebung 7 gelangen. Durch die Druckentlastungseinrichtung 6 wird im Falle einer Explosion innerhalb des Innenraums 3 der maximal auftretende Explosionsdruck gemindert, so dass eine entsprechend geringere Festigkeit des explosionsgeschützten Gehäuses 1 ausreicht, um dem maximal möglichen Explosionsdruck in dem Innenraum 3 standzuhalten. Dadurch kann das explosionsgeschützte Gehäuse 1 einfacher und weniger schwer ausgeführt werden.

In der dargestellten Ausführungsform kann die Druckentlastungseinrichtung 6 hier poröse Körper 8 aufweisen, die in die Seitenwände des Gehäusekörpers 2 integriert sind und die ein ausreichendes Volumen umfassen, damit in die porösen Körper 8 eintretende heiße Gasströme soweit abgekühlt werden, dass deren Volumenreduktion den Aufbau von Überdruckspitzen in dem Innenraum 3 verhindert. Außerdem kann mittels der porösen Körper 8 durch Gasübertritt ins Freie ein zusätzlicher Druckentlastungseffekt bewirkt werden.

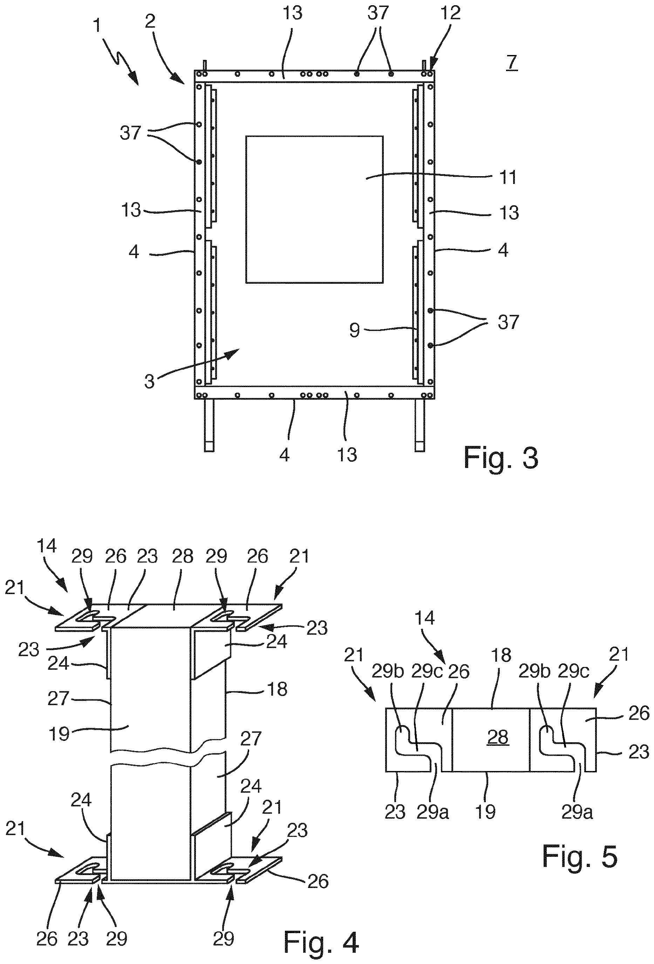

Der Gehäusekörper 2 weist eine Gehäuseöffnung 9 auf. Durch die Gehäuseöffnung 9 ist der Innenraum 3 zugänglich, um beispielsweise wenigstens eine elektrische und/oder elektronische Einrichtung 11, wie sie in Figur 3 angezeigt ist und die als Zündquelle für eine explosionsgefährdete Atmosphäre in der Umgebung 7 dienen könnte, in dem Innenraum 3 des Gehäusekörpers 2 bzw. des explosionsgeschützten Gehäuses 1 anzuordnen.

Bei der hier beschriebenen Ausführungsform ist die Gehäuseöffnung 9 des Gehäusekörpers 2 durch einen in Umfangsrichtung rings um die Gehäuseöffnung 9 vollständig geschlossenen Gehäuseflansch 12 umschlossen. An dem Gehäuseflansch 12 ist eine Gehäuseanlagefläche oder Gehäusespaltfläche 13 vorhanden, die von dem Gehäusekörper 2 abgewandt ist. Vorzugsweise erstreckt sich die gesamte Gehäuseanlagefläche 13 in einer einzigen Ebene. Die Gehäuseanlagefläche 13 kann bei einem abgewandelten Ausführungsbeispiel auch durch die Stirnflächen der Gehäusewände 4 gebildet werden, die die Gehäuseöffnung 9 umschließen. Abhängig von der Dicke bzw. Stärke der Gehäusewände 4 kann daher der Gehäuseflansch 12 optional auch entfallen, wenn die Wandstärke der Gehäusewände 4 ausreichend groß ist.

Zu dem explosionsgeschützten Gehäuse 1 gehört ferner eine Mittelstrebe 14, die an dem Gehäusekörper 2 lösbar montierbar ist, so dass sie bedarfsweise aus dem Gehäusekörper 2 entfernt werden kann, um einen ungehinderten Zugang zu dem Innenraum 3 des Gehäuses 1 bei maximal freier Gehäuseöffnung 9 zu ermöglichen. Figur 3 zeigt das explosionsgeschützte Gehäuse 1 in einem geöffneten Zustand, wobei die Mittelstrebe 14 aus dem Gehäuse 1 herausgenommen ist. Im montierten Zustand erstreckt sich die Mittelstrebe 14 zwischen zwei Abschnitten des Gehäusekörpers 2 in einer derartigen Weise, dass sie die Gehäuseöffnung 9 in zwei Öffnungsabschnitte unterteilt. In dem in den Figuren 1 und 2 dargestellten Beispiel erstreckt sich die Mittelstrebe zwischen einem oberen waagrechten Flanschabschnitt 16 und einem unteren waagrechten Flanschabschnitt 17 des Gehäuseflansches 12 vorzugsweise, jedoch nicht notwendigerweise in etwa in der Mitte der horizontalen Erstreckung des Gehäusekörpers 2, und sie unterteilt die Gehäuseöffnung 9 in zwei nebeneinanderliegende, im Wesentlichen gleich große rechteckige Öffnungsabschnitte 9a und 9b.

Die Mittelstrebe 14 ist, wie auch aus der vereinfachten Perspektivdarstellung gemäß Figur 4 hervorgeht, vorzugsweise ein massiver Balken oder Träger, der hier beispielsweise einen quadratischen oder rechteckigen Querschnitt aufweist. Ferner weist die Mittelstrebe auf einer Seite eine Mittelstrebenanlagefläche 18 auf, die sich in einer einzigen Ebene erstreckt und präzise zu einer Spaltfläche 18 bearbeitet ist, um einen zünddurchschlagsicheren Spalt zu definieren. Die Mittelstrebenanlagefläche 18 ist in Figur 2 sichtbar, während Figur 4 die Mittelstrebe 4 mit Blick auf ihre Rückseite 19 zeigt, die im montierten Zustand dem Innenraum 3 des Gehäuses 1 zugewandt ist und hier zu der Mittelstrebenanlagefläche 18 parallel verläuft.

Die Länge der Mittelstrebe 14 entspricht der lichten Höhe des Innenraums 3, die dem Abstand zwischen der oberen und der unteren Gehäusewand 4 bzw. zwischen dem oberen Flanschabschnitt 16 und dem unteren Flanschabschnitt 17 entspricht. Die Mittelstrebe 14 ist vorzugsweise derart bearbeitet, dass sie mit sehr geringem Spiel zwischen die Gehäusewände 4 bzw. Flanschabschnitte 16, 17 hinein passt.

Um eine schnelle und leichte Montage und Demontage der Mittelstrebe 14 an bzw. von dem Gehäusekörper 2 und ihre Selbstjustage zu ermöglichen, ist die Mittelstrebe 14 an dem Gehäusekörper 2 lose gelagert. Das heißt, dass die Mittelstrebe 14 an dem Gehäusekörper 2 nicht direkt fest fixiert wird. Vielmehr ist eine Lagereinrichtung 20 zur losen Lagerung und beweglichen Halterung der Mittelstrebe 14 an dem Gehäusekörper 2 vorgesehen. Die Lagereinrichtung 20 weist erste Lagerelemente 21, die an der Mittelstrebe 14 befestigt sind, und zweite Lagerelemente 22 an dem Gehäusekörper 2 auf, die mit den ersten Lagerelementen 21 zusammenwirken.

In dem dargestellten Ausführungsbeispiel sind die ersten Lagerelemente 21 jeweils durch eine im Wesentlichen L-förmige Lasche gebildet, die auch als L-Winkel oder L-Profil bezeichnet werden kann und einen ersten Schenkel 24 sowie einen integralen zweiten Schenkel 26 aufweist, die miteinander einen im Wesentlichen senkrechten Winkel bilden. Die ersten Schenkel 24 der Laschen 23 sind an Seitenflächen 27 der Mittelstrebe 14 in der Nähe der jeweiligen Enden der Mittelstrebe 14 befestigt, beispielsweise angeschweißt, angeklebt, angeschraubt oder in sonstiger Weise fest an dieser fixiert, so dass die zweiten Schenkel 26 an den jeweiligen Enden der Mittelstrebe 14 von den Seitenflächen 27 in entgegengesetzte Richtungen weg ragen und im Wesentlichen auf gleicher Höhe mit der oberen bzw. unteren Stirnfläche 28 der Mittelstrebe 14 abschließen.

In den zweiten Schenkeln 26 ist, wie auch aus der Draufsicht auf die Mittelstrebe 14 mit den Laschen 23 gemäß Figur 5 ersichtlich, jeweils ein Langloch 29 vorgesehen. Das Langloch 29 weist hier eine längliche und mehrfach gebogene Gestalt mit mehreren miteinander verbundenen Langlochabschnitten 29a-29c auf. Ein erster Langlochabschnitt 29a weist ein im montierten Zustand zu der Rückseite 19 der Mittelstrebe 14 hin offenes Ende auf, um ein Aufstecken des Langlochs 29 auf ein zugehöriges zweites Lagerelement 22 der Lagereinrichtung 20 an dem Gehäusekörper 2 zu ermöglichen. Ein zweiter Langlochabschnitt 29b erstreckt sich vollständig innerhalb des zweiten Schenkels 26 und ist zu dem ersten Langlochabschnitt 29a parallel und versetzt angeordnet, wobei der zweite Langlochabschnitt 29b wie der erste Langlochabschnitt 29a im montierten Zustand zu der Mittelstrebenanlagefläche 18 senkrecht ausgerichtet ist. Ein dritter Langlochabschnitt 29c verbindet den ersten Langlochabschnitt 29a mit dem zweiten Langlochabschnitt 29b unter Ausbildung einer im Wesentlichen 90°-Biegung zwischen dem ersten Langlochabschnitt 29a und dem Verbindungsabschnitt 29c sowie zwischen dem Verbindungsabschnitt 29c und dem zweiten Langlochabschnitt 29b.

Die Langlöcher 29 in allen Laschen 23 weisen alle den gleichen Verlauf auf, so dass im montierten Zustand die Langlöcher 29 der Laschen 23 an einem Längsende der Mittelstrebe 14 in horizontaler Richtung um einen definierten Abstand zueinander versetzt verlaufen und die Langlöcher 29 der Laschen 23 an den entgegengesetzten Enden der Mittelstrebe 14 an einer Seitenfläche 27 in Längsrichtung der Mittelstrebe 14 fluchtend zueinander verlaufen.

Die zweiten Lagerelemente 22 der Lagereinrichtung 20 sind durch an dem Gehäusekörper 2 vorgesehene Eingriffselemente gebildet, die eingerichtet sind, um bei einer Montage der Mittelstrebe 14 an dem Gehäusekörper 2 in dem jeweiligen Langloch 29 der zugehörigen Lasche 23 verschiebbar aufgenommen zu werden. In dem dargestellten Ausführungsbeipiel sind die zweiten Lagerelemente 22 durch im Wesentlichen zylindrische Bolzen 31 gebildet, deren Durchmesser geringfügig kleiner ist als die Weite des Langlochs 29, so dass die Bolzen 31 mit Spiel in das jeweilige Langloch 29 hineinpassen und eine relative Verschiebung des Bolzens 31 in Bezug auf das Langloch 29 problemlos möglich ist.

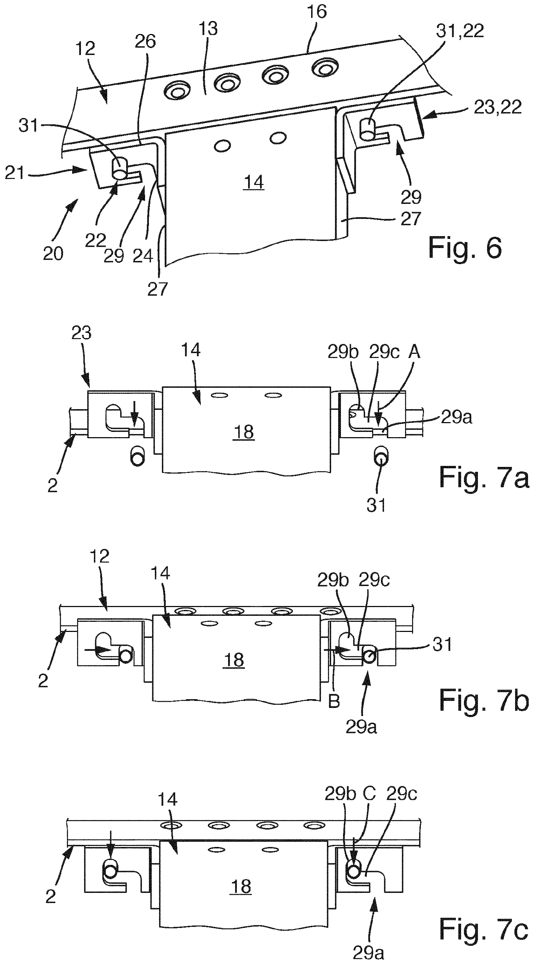

Figur 6 zeigt die Mittelstrebe 14 in einem an dem Gehäusekörper 2 montierten Zustand, in dem die Bolzen 31 an den geschlossenen Enden der Langlöcher 29 in den Laschen 23 aufgenommen sind, relativ zu dem Langloch 29 jedoch verschiebbar sind. Die Mittelstrebe 14 ist auf diese Weise an dem Gehäusekörper 2 lose gelagert und beweglich gehaltert.

Es versteht sich, dass die Bolzen 31 nicht notwendigerweise kreiszylindrisch gestaltet sein müssen, sondern eine beliebige geeignete Form aufweisen können, die geeignet ist, um die zugehörige Lasche 23 mit dem Langloch 29 auf den Bolzen oder ein sonstiges Eingriffselement aufstecken und relativ zu diesem bewegen zu können. Der Abstand zwischen den Bolzen 31 an der oberen oder unteren Gehäusewand 4 in horizontaler Richtung entspricht dem horizontalen Abstand zwischen den Langlöchern 29 an jedem Längsende der Mittelstrebe 14.

Figuren 7a-7c zeigen Perspektivansichten der Schnittstelle zwischen der Mittelstrebe 14 und der zugehörigen oberen oder unteren Gehäusewand 4 des Gehäusekörpers 2 zur Veranschaulichung des Vorgangs der Montage der Mittelstrebe 14 an dem Gehäusekörperabschnitt. Wenngleich hier nur eine Schnittstelle zwischen beispielsweise dem oberen Abschnitt des Gehäusekörpers 2 und dem oberen Längsende der Mittelstrebe 14 dargestellt ist, versteht es sich, dass die Ausführungen hier in gleicher Weise für den unteren Abschnitt des Gehäusekörpers 2 und das untere Längsende der Mittelstrebe 14 gelten. Insbesondere erfolgt die Montage der Mittelstrebe 14 gleichzeitig sowohl an dem oberen als auch dem unteren Abschnitt des Gehäusekörpers 2. Der Montagevorgang ist auch für eine horizontal anzuordnende oder in sonstiger Orientierung an dem Gehäusekörper 2 anzubringende Mittelstrebe 14 gleich.

Zur Montage der Mittelstrebe 14 wird diese von außen an den Gehäusekörper 2 herangeführt und derart positioniert, dass die offenen Enden des ersten Langlochabschnitts 29a den Bolzen 31 an dem Gehäusekörper 2 im Wesentlichen gegenüberliegen, während sich die Mittelstrebe 14 noch außerhalb des Gehäusekörpers 2 befindet. Anschließend kann die Mittelstrebe 14 im Wesentlichen senkrecht zu der Gehäuseöffnung 9 zu dem Innenraum 3 hin bewegt werden, bis die Bolzen 31 in die ersten Langlochabschnitte 29a der Langlöcher 29 hineinfinden oder, anders gesagt, die Langlöcher 29 mit ihren offenen Enden auf die Bolzen 31 aufgesteckt werden. Diese anfängliche Bewegung der Mittelstrebe 14 ist in Figur 7a durch einen Pfeil A angezeigt, während der Zustand, in dem der Bolzen bereits wenigstens zum Teil in dem ersten Langlochabschnitt 29a aufgenommen ist, in Figur 7b dargestellt ist.

Weiter Bezugnehmend auf die Figur 7b wird die Mittelstrebe in der Richtung A soweit verschoben, bis der Bolzen 31 die Biegung zwischen dem ersten Langlochabschnitt 29a und dem dritten, mittleren Langlochabschnitt 29c, der den ersten Langlochabschnitt 29a mit dem zweiten Langlochabschnitt 29b verbindet, erreicht und überwindet. Sobald dies der Fall ist, kann die Mittelstrebe 14 in eine horizontale Richtung, wie sie durch einen Pfeil B in Figur 7b angezeigt ist, im Wesentlichen senkrecht zu der Richtung A in Figur 7a und parallel zu der Gehäuseöffnung 9 bewegt werden, so dass der Bolzen 31 entlang des dritten Langlochabschnitts 29c zunehmend in Richtung des zweiten Langlochabschnitts 29b wandert bzw. relativ verschoben wird. Soweit hier eine (relative) Verschiebung oder Bewegung der Bolzen 31 erwähnt ist, ist es verständlich, dass an sich die Mittelstrebe 14 bewegt bzw. verschoben wird, dadurch aber eine entsprechende relative Verschiebung zwischen dem Bolzen 31 und den Langlochabschnitten 29a-29c bewirkt wird.

Sobald die Bolzen 31 das gegenüberliegende Ende des dritten Langlochabschnitts 29 erreichen und mit dem zweiten Langlochabschnitt 29b fluchten, können die Bolzen 31 die weitere Biegung überwinden und in die zweiten Langlochabschnitte 29b hineinfinden. Dann können die Bolzen 31 weiter in einer durch einen Pfeil C in Figur 7c angezeigten Richtung, senkrecht zu der Richtung B in Figur 7b und senkrecht zu der Gehäuseöffnung 9 zu dem Innenraum 3 hin relativ bewegt werden, so dass sie entlang der zweiten Langlochabschnitte 29b zu den geschlossenen Enden von diesen wandern bzw. relativ verschoben werden.

Wenn die Bolzen 31 die geschlossenen Enden der Langlöcher 29 erreichen, befindet sich die Mittelstrebe 14 in ihrer Endposition, in der die Mittelstrebe 14 an dem Gehäusekörper 2 fertig lösbar montiert, lose gelagert und beweglich gehaltert ist. Die Weite und Länge der Langlöcher 29 in allen Langlochabschnitten 29a-29c sind im Verhältnis zu den Maßen der Bolzen 31 oder sonstiger Eingriffsmittel derart passend gewählt, dass jeder Bolzen 31 oder jedes sonstige Eingriffsmittel leicht mit Spiel in dem zugehörigen Langloch 29 aufgenommen und entlang dessen bewegt werden kann, was der Mittelstrebe 14 im montierten Zustand eine entsprechende Bewegungsfreiheit relativ zu dem Gehäusekörper 2 bietet. In der Endposition kann die Mittelstrebe 14 gegenüber dem Gehäuseflansch 12, insbesondere der Gehäuseanlagefläche 13, geringfügig zu dem Innenraum 3 hin zurückversetzt sein, wie dies auch aus Figur 6 ersichtlich ist.

Es ist verständlich, dass die ersten und zweiten Lagerelemente 21 und 22 an der Mittelstrebe 14 und dem Gehäusekörper 2 auch gegeneinander vertauscht werden können, so dass gegebenenfalls leicht modifizierte Laschen mit Langlöchern an dem Gehäusekörper 2 vorgesehen sein können, während die Bolzen 31 oder sonstige Eingriffsmittel an der Mittelstrebe 14 vorgesehen sein können. Außerdem können die Bolzen 31 an der Mittelstrebe 14 oder dem Gehäusekörper 2 integral ausgebildet oder durch eine beliebige Verbindungsmethode, z.B. durch Anschrauben, Anschweißen oder anderweitig, fest daran fixiert werden.

Erneut bezugnehmend auf die Figuren 1 und 2 ist ersichtlich, dass das explosionsgeschützte Gehäuse 1 außerdem wenigstens zwei Deckel 32 aufweist. Die Deckel 32 sind dazu eingerichtet, die Gehäuseöffnung 9 in einer Schließstellung der Deckel 32 vollständig abzudecken. In dem dargestellten Ausführungsbeispiel entsprechen die Anzahl und die Größe der Deckel 32 der Anzahl und der Größe der Öffnungsabschnitte 9a, 9b, die durch die Mittelstrebe 14 oder mehrere derartige Mittelstreben definiert sind. In dem dargestellten bevorzugten Ausführungsbeispiel mit einer einzigen Mittelstrebe, die vorzugsweise zentral angeordnet ist, sind zwei Deckel 32 vorhanden, die hier im Wesentlichen gleich groß bemessen sein können. Sind zwei oder mehrere Mittelstreben 14 bzw. Öffnungsabschnitte der Gehäuseöffnung 9 vorhanden, erhöht sich die Anzahl der Deckel 32 entsprechend.

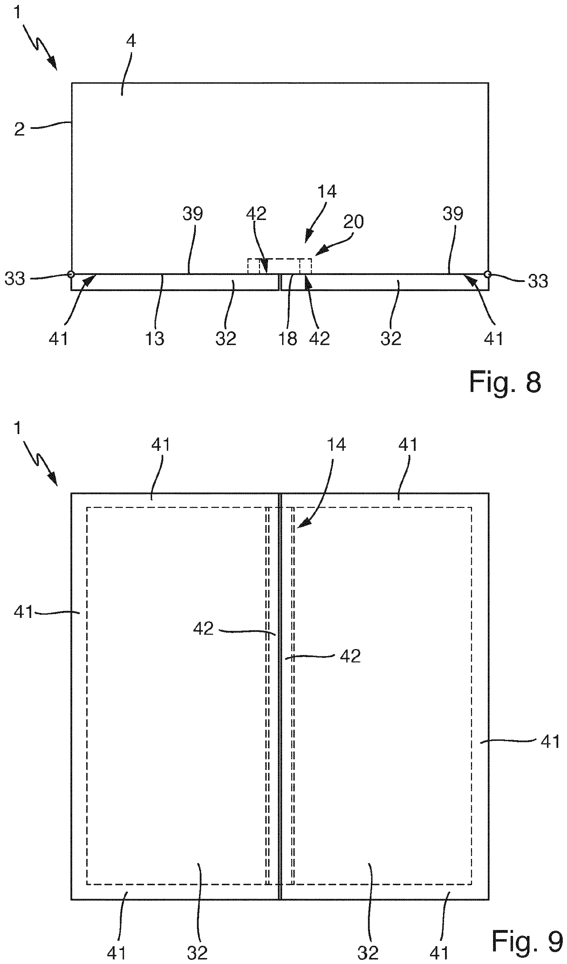

Die Deckel 32 sind als separate Bauteile ausgeführt und nicht miteinander unmittelbar verbunden oder bewegungsgekoppelt. Jeder Deckel 32 kann unabhängig von dem einen oder den mehreren weiteren Deckeln 32 zwischen einer Schließstellung und einer Offenstellung bewegt werden. Bei einem explosionsgeschützten Gehäuse 1 gemäß den Figuren 1 und 2 befinden sich die Deckel 32 in der Darstellung in Figur 1 in ihrer jeweiligen Schließstellung, während sie sich in Figur 2 in einer jeweiligen Offenstellung befinden. Die Deckel 32 können als aufschwenkbare Flügeltüren über in Figur 8 angezeigte Scharniere oder Gelenke 33 an dem Gehäusekörper 2 oder an dem Gehäuseflansch 12, falls vorhanden, schwenkbar angebracht sein und zwischen der Schließstellung und der Offenstellung geschwenkt werden. Es ist auch möglich, die Deckel 32 als völlig separat handhabbare Bauteile auszuführen, die nicht an dem Gehäusekörper 2 angelenkt sind.

Wie insbesondere aus den Figuren 1 und 2 erkennbar, ist eine Spanneinrichtung 34 vorgesehen, um die Deckel 32, die Mittelstrebe 14 und den Gehäusekörper 2 lösbar miteinander zu verbinden. Insbesondere ist die Spanneinrichtung 34 hier dazu vorgesehen und eingerichtet, die Deckel 32 in Anlage an dem Gehäusekörper 2 und der Mittelstrebe 14 festzuspannen und festzuhalten, so dass zwischen den Deckeln 32 und dem Gehäusekörper 2 und der Mittelstrebe 14 definierte zünddurchschlagsichere Spalte gebildet und aufrechterhalten werden.

In dem dargestellten Ausführungsbeispiel basiert die Spanneinrichtung 34 auf einer Schraubverbindung und enthält Schraubenbolzen 36 und damit zusammenwirkende Gewindebohrungen 37, die in der Gehäuseanlagefläche 13 des Gehäusekörpers 2, insbesondere des Gehäuseflansches 12 und entlang der Mittelstrebe 14 verteilt eingearbeitet sind. Außerdem sind in den Deckeln 32 Öffnungen 38 vorgesehen, die im geschlossenen Zustand der Deckel 32 mit den Gewindebohrungen 37 des Gehäusekörpers 2 und der Mittelstrebe 14 fluchten und wahlweise mit oder ohne Gewinde eingerichtet sein können.

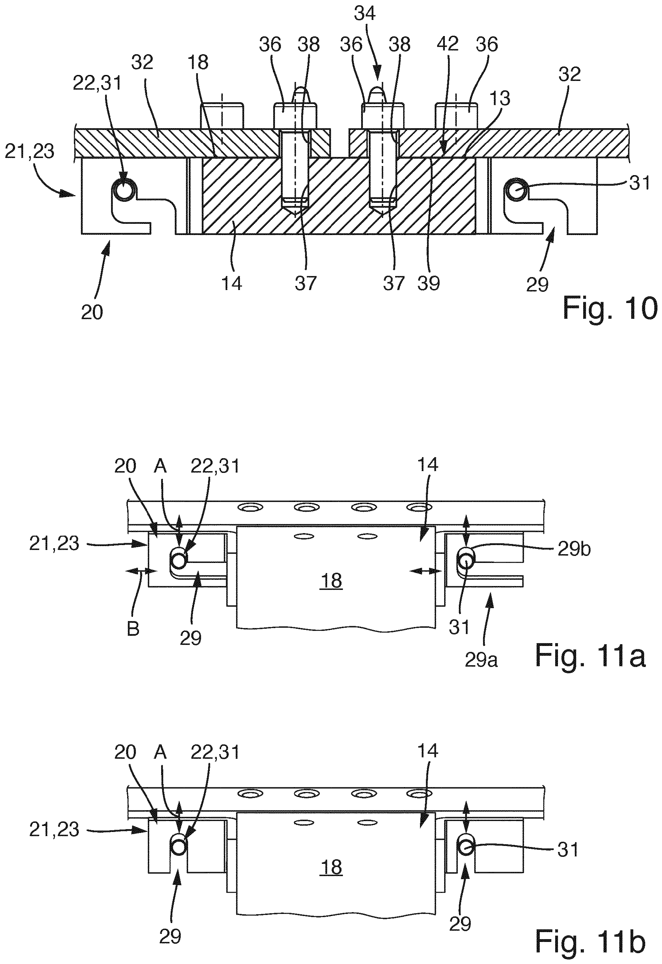

Wie auch aus Figur 10 ersichtlich, werden die Schraubenbolzen 36 durch die Öffnungen 38 der Deckel 32 hindurch in die Gewindebohrungen 37 des Gehäusekörpers 2 und der Mittelstrebe 14 eingeschraubt und festgezogen, um die Deckel 32 für den Einsatz fest zu fixieren.

In dem dargestellten Ausführungsbeispiel weist die massive Mittelstrebe 14 eine Dicke, gemessen senkrecht zwischen der Mittelstrebenanlagefläche 18 und der Rückseite 19, auf, die ausreicht, um ein Innengewinde unmittelbar in der Mittelstrebe 14 einzuformen. Das Innengewinde ist somit integraler Bestandteil der Mittelstrebe 14.

Alternativ könnte die Mittelstrebe 14 auch mit einer verringerten Dicke, beispielsweise als ein U-förmiges Profil ausgebildet sein, wobei dann beispielsweise hier nicht näher dargestellte Innengewindebuchsen an der dem Innenraum 3 zugewandten Rückseite 19 der Mittelstrebe 14 angebracht sein können. Die Verbindung der Gewindebuchsen mit der Mittelstrebe 14 kann durch Schweißen, Kleben oder eine andere geeignete Verbindungsart hergestellt werden. Durch Verwendung einer Mittelstrebe 14 mit verringerter Dicke und mit Gewindebuchsen kann das Gewicht der Mittelstrebe 14 bedarfsweise reduziert werden.

Nachfolgend soll nun die Montage und Einrichtung des explosionsgeschützten Gehäuses 1 näher erläutert werden.

Zunächst wird der Gehäusekörper 2 bereitgestellt, wobei angenommen wird, dass die Mittelstrebe 14 noch nicht an dem Gehäusekörper 2 montiert ist. Andernfalls kann die Mittelstrebe 14 bedarfsweise schnell und einfach von dem Gehäusekörper 2 gelöst werden, wenn beispielsweise das explosionsgeschützte Gehäuse 1 nach einem Einsatz umgerüstet werden soll und die gesamte Gehäuseöffnung 9 benötigt wird, um auch große und sperrige elektrische und/oder elektronische Einrichtungen 11 in dem Innenraum 3 unterzubringen. Das Lösen und Entfernen der Mittelstrebe 14 von dem Gehäusekörper 2 erfolgt in der umgekehrten Reihenfolge und Weise, als in den Figuren 7a-7c veranschaulicht und in Verbindung damit vorstehend beschrieben. Somit kann die Mittelstrebe 14 durch aufeinanderfolgende Bewegungen senkrecht und quer zu der Zugangsöffnung 9 bewegt werden, um die Langlöcher 29 relativ zu den Bolzen 31 an dem Gehäusekörper 2 derart zu bewegen, dass die Bolzen 31 entlang der Langlöcher 29 relativ verschoben werden, bis sie die Laschen 23 durch die offenen Enden der Langlöcher 29 verlassen. Ist die Mittelstrebe 14 auf diese Weise gelöst, kann sie entfernt werden, wobei dann barrierefreier Zugang zu dem Innenraum 3 durch die gesamte Gehäuseöffnung 9 geboten ist.

Wenn alle elektrischen, elektronischen oder sonstigen Einrichtungen 11 in dem Innenraum 3 positioniert oder montiert worden sind, kann anschließend die Mittelstrebe 14 in der in Verbindung mit den Figuren 7a-7c vorstehend beschriebenen Weise lösbar an dem Gehäusekörper 2 montiert werden. Im montierten Zustand ist die Mittelstrebe 14 mittels der Lagereinrichtung 20 an dem Gehäusekörper 2 lose gelagert. Anschließend können die Deckel 32 geschlossen und mittels der Spanneinrichtung 34 mit dem Gehäusekörper 2 und der Mittelstrebe 14 fest verbunden werden. Hierzu werden die Schraubenbolzen 36 durch die Öffnungen 38 in den Deckeln 32 hindurchgesteckt und in die Gewindebohrungen 37 in dem Gehäusekörper 2 und der Mittelstrebe 14 eingeschraubt und festgezogen.

Wenn die Schraubenbolzen 36 in den Innengewinden der Gewindebohrungen 37 der Mittelstrebe 14 festgezogen werden, kann sich die Mittelstrebe 14 aufgrund ihrer losen und eine Bewegung zulassenden Lagerung an dem Gehäusekörper 2 zu den Deckeln 14 hin bewegen, bis sich die Mittelstrebenanlagefläche 18 eng an die entsprechenden Anlageflächen 39 der Deckel 32 anlegt. Dies wird durch die lose, bewegliche Lagerung zwischen den Bolzen 31 und den Langlöchern 29, insbesondere in dem zweiten Langlochabschnitt 29b, ermöglicht.

Im fest montierten Zustand liegt die Deckelanlagefläche 39 jedes Deckels 32 an der jeweiligen halben umlaufenden Gehäuseanlagefläche 13 und der Mittelstrebenanlagefläche 18 an und wird durch die Spanneinrichtung 34 dagegen gedrückt. Zwischen der Deckelanlagefläche 39 jedes Deckels 32 und der Gehäuseanlagefläche 13 entsteht ein erster zünddurchschlagsicherer Spalt 41, wie er in der Draufsicht auf das Gehäuse 1 nach Figur 8, in der Vorderansicht nach Figur 9 oder in der detaillierten Querschnittsdarstellung gemäß Figur 10 angezeigt ist. Der erste zünddurchschlagsichere Spalt 41 ist ein Flachspalt, der in der zwischen der Deckelanlagefläche oder - spaltfläche 39 und der Gehäuseanlagefläche oder -spaltfläche 13 definierten Spaltebene liegt.

Außerdem werden durch die Spanneinrichtung 34 die Deckel 32 auch an der Mittelstrebe 14 befestigt, so dass sie jeweils mit einem entsprechenden Umfangsabschnitt (inneren Endabschnitt) ihrer Deckelanlagefläche 39 an einem entsprechenden Abschnitt der Mittelstrebenanlagefläche 18 der Mittelstrebe 14 anschließen. Die inneren Enden der Deckel 32, die einander gegenüberliegen, sind im geschlossenen Zustand in geringem Abstand zueinander angeordnet, ohne einander zu berühren. Die Endabschnitte der Deckelanlageflächen oder -spaltflächen 39 bilden jeweils mit den zugehörigen Abschnitten der Mittelstrebenanlagefläche oder -spaltfläche 18 einen zweiten zünddurchschlagsicheren Spalt 42. Der Spalt 42 ist ebenfalls als Flachspalt gestaltet und liegt in der gleichen Ebene wie der erste zünddurchschlagsichere Spalt 41. Somit ist an jedem Deckel 32 ein im Wesentlichen umlaufender, kontinuierlicher zünddurchschlagsicherer Spalt gebildet, der den ersten zünddurchschlagsicheren Spalt 41 und den zweiten zünddurchschlagsicheren Spalt 42 umfasst.

Alle zünddurchschlagsicheren Spalte 41, 42 sind Flachspalte, die sich in der gleichen Spaltebene befinden und hinreichend eng und lang sind, so dass keine Flamme, kein Funken und keine heißen zündfähigen Gase aus dem Innenraum durch die zünddurchschlagsicheren Spalte nach außen entweichen können. Die Spanneinrichtung 34 hält die Deckel 32 in fester Anlage mit dem Gehäusekörper 2, so dass auch im Falle einer impulsartigen Drucksteigerung in dem Gehäuse 1 die Spaltweite kein Spaltmaß erreicht, das einen Zünddurchschlag zulassen würde.

Optional könnten zusätzlich Dichtungen gemäß einer IP Schutzklasse gegen das Eindringen von Staub und/oder Wasser in den Innenraum 3 vorgesehen sein. Die zünddurchschlagsicheren Spalte 41, 42 sind - unabhängig von einer optionalen Dichtung - hinsichtlich des Strömungsweges zwischen dem Innenraum 3 und der Umgebung 7 derart dimensioniert, dass heiße Gase ausreichend gekühlt werden oder Funken oder Flammen gelöscht werden, bevor sie auf ihrem Weg von dem Innenraum 3 nach außen in die Umgebung 7 mit der explosionsgefährdeten Atmosphäre gelangen. Auf diese Weise wird die Zünddurchschlagsicherheit erreicht. Die Ausgestaltung der zünddurchschlagsicheren Spalte 41, 42 entspricht einem oder mehreren vorgegebenen Standards. Vorzugsweise ist das explosionsgeschützte Gehäuse 1 in der Zündschutzart "druckfeste Kapselung" (Ex d) gemäß einer der Normen EN 60079-1 oder IIC 60079-1 ausgebildet.

Es sind vielfältige Modifikationen des vorstehend beschriebenen explosionsgeschützten Gehäuses möglich. Das Gehäuse 1 kann, wie bereits oben erwähnt, unterschiedliche Formen und unterschiedliche Anzahl und Anordnung von Mittelstreben 14 und zugehörigen Deckeln 32 haben. Beispielsweise können mehr als zwei Mittelstreben 14 vorgesehen sein, die im Abstand nebeneinander, parallel zueinander oder auch in anderer Ausrichtung zueinander positioniert werden können. Es können auch waagrechte Streben vorgesehen sein, die auch eine Übereinanderanordnung von Deckeln 32 ermöglichen. Derartige Streben können ebenfalls mit der beschriebenen losen Lagerung und Bewegungsfreiheit an dem Gehäusekörper 2 lösbar montiert werden. Es sollte betont werden, dass sich die Begriffe "lose Lagerung" und "bewegliche Halterung" vor allem auf den montierten Zustand der Mittelstrebe 14 an dem Gehäusekörper 2 beziehen, wenn die Deckel 32 an dem Gehäusekörper 2 und der Mittelstrebe 14 noch nicht durch die Spanneinrichtung 34 gesichert sind. Es sind aber jedenfalls keine Spannmittel, Klemmmittel oder sonstige Fixiermittel vorgesehen, die die Mittelstrebe 14 unmittelbar oder direkt an dem Gehäusekörper 2 fest fixieren würden.

Es können unterschiedliche Spanneinrichtungen vorgesehen sein. Anstelle der Schraubverbindungen können Spannklammern, Schnellspannverschlüsse oder andere Schließmechanismen oder Spannmittel, Befestigungsmittel, Klemm- oder Haltemittel die Deckel 32 in fester Anlage mit dem Gehäusekörper 2 und der Mittelstrebe 14 halten.

Weitere vorteilhafte Ausführungsformen der Erfindung sind in den Figuren 11-16 dargestellt. Sofern die Ausführungsformen mit der vorstehend beschriebenen Ausführungsform hinsichtlich der Struktur und/oder der Funktionsweise übereinstimmen, wird unter Zugrundelegung der gleichen Bezugszeichen auf die vorstehende Beschreibung verwiesen.

In den Figuren 11a und 11b sind in einer der Figur 7c ähnlichen Darstellung modifizierte Ausführungsformen der Langlöcher 29 der L-förmigen Laschen 23 zur losen und beweglichen Lagerung der Mittelstrebe 14 veranschaulicht. In der Figur 11b weist jedes Langloch 29 nur einen ersten Langlochabschnitt 29a und einen zweiten Langlochabschnitt 29b, aber keinen dazwischen befindlichen dritten Langlochabschnitt 29c auf. Der erste Langlochabschnitt 29a verläuft im Wesentlichen in Seitenrichtung, senkrecht zu der Seitenfläche 27 der Mittelstrebe 14, so dass sein offenes Ende zur Seite hin aus der Lasche 23 nach außen mündet. Der erste Langlochabschnitt 29a geht unter Ausbildung einer 90°-Biegung unmittelbar in den zweiten Langlochabschnitt 29b über, in dem der Bolzen 31 in der dargestellten Endposition aufgenommen ist. Zur Montage wird die Mittelstrebe 14 zwischen dem oberen und dem unteren Abschnitt des Gehäusekörpers 2 bzw. des Gehäuseflansches 12 positioniert und seitlich, parallel zu der Gehäuseöffnung derart bewegt, dass die Bolzen 32 in die ersten Langlochabschnitte 29a einfinden und relativ zu dem jeweiligen Langloch 29 bis zu dem zweiten Langlochabschnitt 29b bewegt werden.

Figur 11b veranschaulicht eine weitere optionale Ausgestaltung des Langlochs 29. Hier weist das Langloch 29 nur einen einzigen Langlochabschnitt mit einem offenen Ende, das von der Mittelstrebenanlagefläche 18 abgewandt ist, und einem der Mittelstrebenanlagefläche 18 zugewandten geschlossenen Ende auf. Zur Montage oder Demontage der Mittelstrebe 14 an bzw. von dem Gehäusekörper 2 ist nur eine einzige Bewegung der Mittelstrebe 14 in einer Richtung A senkrecht zu der Gehäuseöffnung 9 erforderlich, um die Langlöcher 29 auf die zugehörigen Bolzen 31 aufzustecken oder von diesen zu entfernen und um die Langlöcher 29 und die Bolzen 31 relativ zueinander zu verschieben.

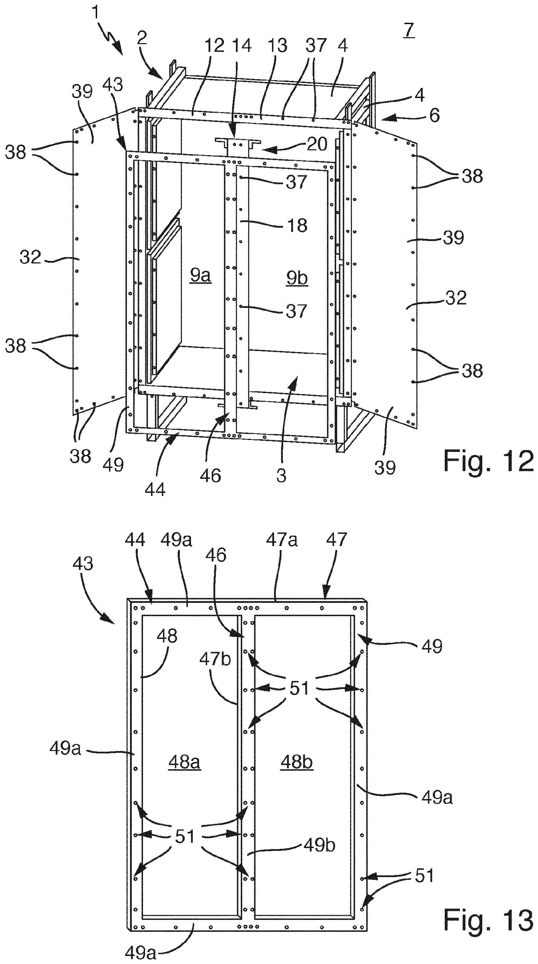

Eine weitere vorteilhafte Ausführungsform eines explosionsgeschützten Gehäuses 1 gemäß der Erfindung ist in den Figuren 12 bis 16 dargestellt. Diese Ausführungsform des Gehäuses 1 verwendet neben dem Gehäusekörper 2 und der lösbar montierten und lose gelagerten Mittelstrebe 14 zusätzlich einen Zwischenrahmen 43, der im Betrieb zwischen den Deckeln 32 und dem Gehäusekörper 2 und der Mittelstrebe 14 eingefügt ist. Der Zwischenrahmen 43 besteht aus einem dünnen, leicht elastischen Blech und kann aus dem gleichen insbesondere metallischen Material wie der Gehäusekörper 2 und die Mittelstrebe 14 gefertigt sein. Die Dicke des Zwischenrahmens 43 kann weniger als 10 mm, vorzugsweise weniger als 5 mm betragen, um gut mit der Mittelstrebe 14 zusammenzuwirken.

Der Zwischenrahmen 43 weist einen Umfangssteg 44 und wenigstens einen Mittelsteg 46 auf. Der Umfangssteg 44 ist eingerichtet, um im montierten Zustand die Gehäuseöffnung 9 zu umgeben und unter Ausbildung eines zünddurchschlagsicheren Spaltes an der Gehäuseanlagefläche oder -spaltfläche 13 des Gehäusekörpers 2 anzuliegen. Hierzu ist an dem Umfangssteg 44 ein erster Flächenabschnitt 47a einer inneren Rahmenanlagefläche oder -spaltläche 47 gebildet, die sich vorzugsweise in einer einzigen Ebene erstreckt. Die Rahmenanlagefläche 47 ist dazu eingerichtet, an der Gehäuseanlagefläche 13 angelegt zu werden. Ein von dem Umfangssteg 44 umschlossener Rahmeninnenbereich 48 des Zwischenrahmens 43 hat vorzugsweise dieselbe Form und dieselbe Abmessung wie die Gehäuseöffnung 9 des Gehäusekörpers 2.

Der Mittelsteg 46 des Zwischenrahmens 43 durchsetzt den Rahmeninnenbereich 48 und unterteilt diesen in zwei Bereichsabschnitte, die zu den Öffnungsabschnitten 9a, 9b der durch die Mittelstrebe 14 unterteilten Gehäuseöffnung 9 passen. Bei der in der Explosionsdarstellung nach Figur 12 und in der Perspektivansicht nach Figur 13 isoliert dargestellten Ausführungsform des Zwischenrahmens 43 ist ein einziger Mittelsteg 46 vorhanden, der den Rahmeninnenbereich 48 in einen ersten Bereichsabschnitt 48a und einen zweiten Bereichsabschnitt 48b unterteilt. Es können auch mehrere Mittelstege 46, passend zu der Anzahl der Mittelstreben 14 vorhanden sein.

Der wenigstens eine Mittelsteg 46 ist vorzugsweise an seinen beiden Enden jeweils mit dem Umfangssteg 44 verbunden. Er kann mit dem Umfangssteg 44 integral ausgebildet oder mit diesem durch Klebung, Schweißung oder in sonstiger geeigneter Weise fest verbunden sein. Der Mittelsteg 46 erstreckt sich vorzugsweise geradlinig. Der Mittelsteg 46 weist auf seiner Rückseite, die im montierten Zustand der Mittelstrebe 14 zugewandt ist und diese abdeckt, einen weiteren Abschnitt 47b der inneren Rahmenanlagefläche 47 auf.

An der Außenseite, die im montierten Zustand von dem Gehäusekörper 2 und der Mittelstrebe 14 abgewandt ist, weist der Zwischenrahmen 43 eine äußere Rahmenanlagefläche oder -spaltfläche 49 auf. Die äußere Rahmenanlagefläche 49 umfasst einen ersten Anlageflächenabschnitt 49a an dem Umfangssteg 44 und einen zweiten Anlageflächenabschnitt 49b an dem Mittelsteg 46.

Außerdem sind in dem Zwischenrahmen 43 Durchgangsöffnungen 51 ausgebildet, die zu den Gewindebohrungen 37 in dem Gehäusekörper 2 und der Mittelstrebe 14 und den Öffnungen 38 der Deckel 32 fluchtend passen, wenn sich die Deckel 32 in geschlossenem Zustand befinden und der Zwischenrahmen 43 zwischen den Deckeln 32 und dem Gehäusekörper 2 eingefügt ist.

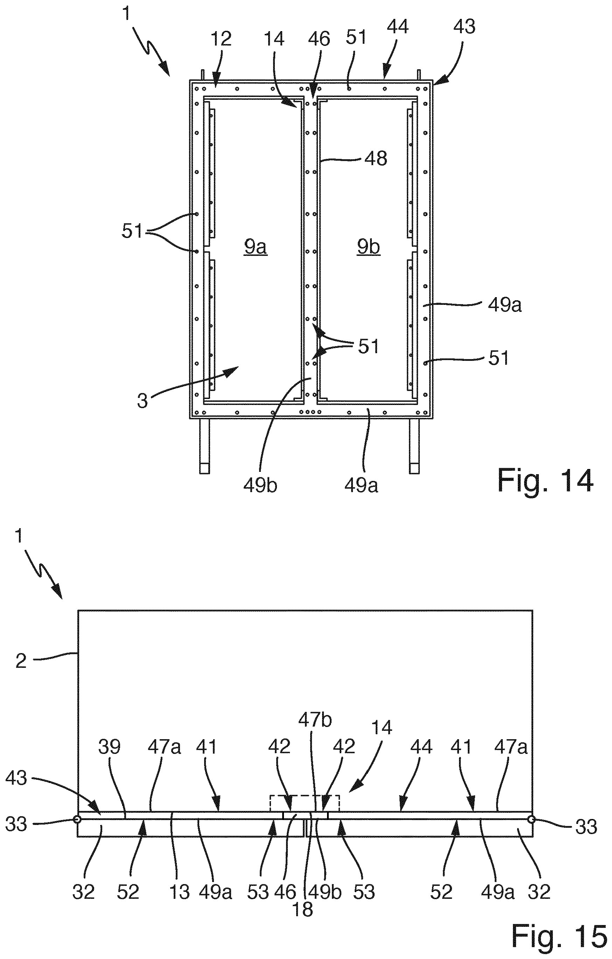

Figur 14 zeigt eine Vorderansicht des Gehäusekörpers 2 mit daran angebrachtem Zwischenrahmen 43 in einem geöffneten Zustand, wobei die Deckel 32 weggelassen sind. Der Umfangssteg 44 des Zwischenrahmens 43 schließt an den die Gehäuseöffnung 9 umgebenden Rahmenbereich des Gehäusekörpers 2 bzw. den Gehäuseflansch 12, falls vorhanden, an und deckt diesen zumindest teilweise ab, während der Mittelsteg 46 an die Mittelstrebe 14 anschließt und diese wenigstens größtenteils abdeckt.

Mittels der Spanneinrichtung 34 die eine Vielzahl von Spannmitteln, insbesondere Schraubenbolzen mit zugehörigen Gewindebohrungen 37, aufweist, werden die Deckel 32, der Zwischenrahmen 43, der Gehäusekörper 2 und die Mittelstrebe 14 lösbar miteinander fest verbunden. Die Spanneinrichtung 34 ist dazu eingerichtet, den Zwischenrahmen 43 in Anlage an dem Gehäusekörper 2 und der Mittelstrebe 14 festzuspannen und festzuhalten und die Deckel 32 in Anlage an dem Umfangssteg 44 und dem Mittelsteg 46 des Zwischenrahmens 43 festzuspannen und festzuhalten. Dabei können eingesenkte Schrauben (nicht veranschaulicht) verwendet werden, um den Zwischenrahmen 43 an dem Gehäusekörper 2 vorzumontieren, während die Schraubenbolzen 36 oder sonstigen Spannmittel durch die Öffnungen 38 der Deckel 32 und die Durchgangsöffnungen 51 des Zwischenrahmens 43 hindurch und in die Gewindebohrungen 37 in dem Gewindekörper 2 und der Mittelstrebe 14 eingeschraubt und festgezogen zu werden, um sowohl den Zwischenrahmen 43 als auch die Deckel 32 endgültig zu fixieren.

Im montierten Zustand liegt der erste innere Rahmenanlageflächenbereich 47a an der halben umlaufenden Gehäuseanlagefläche 13 an und wird durch die Spanneinrichtung 34 gegen diese gedrückt, so dass dazwischen der erste zünddurchschlagsichere Spalt 41 gebildet wird. Ferner wird der zweite innere Rahmenanlageflächenabschnitt 47b an dem Mittelsteg 46 gegen die Mittelstrebenanlagefläche 18 in Anlage gedrückt und bildet dazwischen den zweiten zünddurchschlagsicheren Spalt 42. Die zünddurchschlagsicheren Spalte 41, 42 sind Flachspalte, die in einer gemeinsamen Ebene liegen, die zwischen dem Zwischenrahmen 43 und dem Gehäusekörper 2 und der Mittelstrebe 14 festgelegt ist.

Ferner sind, wenn die Deckel 32 an dem Zwischenrahmen anliegen und gesichert sind, zwischen dem Abschnitt 49a der äußeren Rahmenanlagefläche an dem Umfangssteg 44 des Zwischenrahmens 43 und der gegenüberliegenden halben umlaufenden Deckelanlagefläche 39 jeweils ein dritter zünddurchschlagsicherer Spalt 52 gebildet, während jeweils ein vierter zünddurchschlagsicherer Spalt 53 zwischen dem Flächenabschnitt 49b der äußeren Rahmenanlagefläche 49 an dem Mittelsteg 46 des Zwischenrahmens 43 und dem inneren Randabschnitt der Deckelanlagefläche 39 des Deckels 32 gebildet ist. Der erste bis vierte zünddurchschlagsichere Spalt 41, 42, 52, 53 sind in Figur 15 angezeigt, die eine Draufsicht von oben auf das explosionsgeschützte Gehäuse 1 gemäß der Figur 12 in einer vereinfachten Darstellung unter Weglassung einiger Details zeigt.

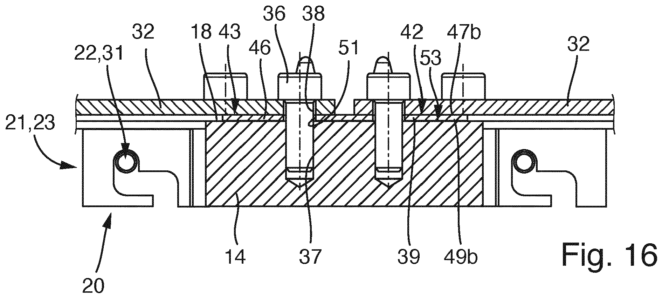

In Figur 16 ist ein Querschnitt durch einen Ausschnitt des Gehäuses 1 dargestellt, in dem die Deckel 32, der Mittelsteg 46 des Zwischenrahmens 43 und die Mittelstrebe 14 im montierten Zustand dargestellt sind. Aus Figur 16 gehen insbesondere der zweite zünddurchschlagsichere Flachspalt 42 und der vierte zünddurchschlagsichere Spalt 53 hervor, die zwischen dem Mittelsteg 46 des Zwischenrahmens 43 und der Mittelstrebe 14 einerseits und den inneren Randabschnitten der Deckel 32 andererseits ausgebildet sind. Figur 16 veranschaulicht auch die Lagereinrichtung 20, die die Mittelstrebe 14 an dem Gehäusekörper 2 lose lagert und beweglich haltert, sowie beispielhafte Schraubenbolzen 36, die die Deckel 32 und den Zwischenrahmen 43 mit der Mittelstrebe 14 lösbar verbinden und für die Aufrechterhaltung der zünddurchschlagsicheren Spalte sorgen. Beim Festziehen der Schraubenbolzen 36 kann die Mittelstrebe 14 sanft und gleichmäßig gegen den Mittelsteg 46 des dünnen Zwischenrahmens 43 gezogen, bewegt, angelegt und gleichmäßig angedrückt werden, so dass keine Verformungen des Zwischenrahmens 43 resultieren und ein optimaler, minimaler zünddurchschlagsicherer Spalt 53 gleichmäßiger Spaltweite entlang der gesamten Mittelstrebenspaltfläche 18 entsteht, ohne dass hierzu irgendeine Justage erforderlich ist.

Ein erfindungsgemäßes explosionsgeschütztes Gehäuse 1 weist einen Gehäusekörper 2, der einen Innenraum 3 begrenzt und eine Gehäuseöffnung 9 umfasst, die Zugang zu dem Innenraum 3 bietet, wenigstens eine Mittelstrebe 14, die sich zwischen Abschnitten des Gehäusekörpers 2 erstreckt und die Gehäuseöffnung 9 in wenigstens zwei Öffnungsabschnitte 9a, 9b unterteilt, und wenigstens zwei separate Deckel 32 auf, die eingerichtet und angeordnet sind, um jeweils im geschlossenen Zustand an dem Gehäusekörper 2 und der Mittelstrebe 14 derart gesichert zu werden, dass zwischen den Deckeln 32 und dem Gehäusekörper 2 sowie zwischen den Deckeln 32 und der Mittelstrebe 14 allein zünddurchschlagsichere Spalte 41, 42, 52, 53 gebildet sind. Die Mittelstrebe 14 ist an dem Gehäusekörper 2 lösbar montiert und im montierten Zustand an dem Gehäusekörper 2 lose gelagert und beweglich gehaltert, so dass sie durch keine Fixiermittel an dem Gehäusekörper 2 direkt fixiert ist. Die Mittelstrebe 14 kann als solche, individuell relativ leicht und schnell aus dem Gehäusekörper 2 herausgenommen werden, um eine barrierefreie Gehäuseöffnung 9 maximaler Größe zu schaffen.

## Patentansprüche

1. Explosionsgeschütztes Gehäuse (1), insbesondere Gehäuse der Zündschutzart "druckfeste Kapselung",
mit einem Gehäusekörper (2), der einen Innenraum (3) begrenzt und eine Gehäuseöffnung (9) aufweist, die Zugang zu dem Innenraum (3) bietet, wobei der Gehäusekörper (2) eine umlaufende Gehäusespaltfläche (13) aufweist, die die Gehäuseöffnung (9) umgibt;
mit wenigstens einer Mittelstrebe (14), die an dem Gehäusekörper (2) lösbar montierbar ist, so dass sie sich aus dem Gehäusekörper (2) herausnehmen lässt, wobei die wenigstens eine Mittelstrebe (14) im montierten Zustand an dem Gehäusekörper (2) lose gelagert ist, wobei die wenigstens eine Mittelstrebe (14) wenigstens eine Mittelstrebenspaltfläche (18) aufweist; und
mit wenigstens zwei separaten Deckeln (32), die eingerichtet und angeordnet sind, um jeweils im geschlossenen Zustand an dem Gehäusekörper (2) derart gesichert zu werden, dass zwischen den Deckeln (32) und dem Gehäusekörper (2) an der umlaufenden Gehäusespaltfläche (13) zünddurchschlagsichere Spalte (41, 42; 52, 53) gebildet sind;
**dadurch gekennzeichnet, dass**
die lösbare Mittelstrebe (14) sich im montierten Zustand zwischen Abschnitten der umlaufenden Gehäusespaltfläche (13) erstreckt und die Gehäuseöffnung (9) in wenigstens zwei Öffnungsabschnitte (9a, 9b) unterteilt;
die separaten Deckel (32) jeweils eingerichtet und angeordnet sind, um im geschlossenen Zustand an der Mittelstrebe (14) gesichert zu werden; und
zwischen den Deckeln (32) und der Mittelstrebe (14) an der wenigstens einen Mittelstrebenspaltfläche (18) zünddurchschlagsichere Spalte (41, 42; 52, 53) gebildet sind.

2. Explosionsgeschütztes Gehäuse (1) nach Anspruch 1, wobei die umlaufende Gehäusespaltfläche (13) einen ersten (41) der zünddurchschlagsicheren Spalte (41, 42; 52, 53) definiert und die wenigstens eine Mittelstrebenspaltfläche (18) einen zweiten (42) der zünddurchschlagsicheren Spalte (41, 42; 52, 53) definiert, wobei der erste und der zweite zünddurchschlagsichere Spalt (41, 42) Flachspalte sind, die in einer gemeinsamen Ebene liegen.

3. Explosionsgeschütztes Gehäuse (1) nach Anspruch 1 oder 2, wobei die wenigstens eine Mittelstrebe (14) eingerichtet ist, um an dem Gehäusekörper (2) lose gelagert und beweglich gehaltert zu sein, und keine Fixiermittel zur direkten Sicherung der wenigstens einen Mittelstrebe (14) an dem Gehäusekörper (2) vorgesehen ist.

4. Explosionsgeschütztes Gehäuse (1) nach einem der vorhergehenden Ansprüche, das eine Lagereinrichtung (20) zur losen Lagerung und beweglichen Halterung der wenigstens einen Mittelstrebe (14) an dem Gehäusekörper (2) vorgesehen ist, wobei die Lagereinrichtung (20) ein erstes Lagerelement (21) an der Mittelstrebe (14) und ein damit zusammenwirkendes zweites Lagerelement (22) an dem Gehäusekörper (2) aufweist.

5. Explosionsgeschütztes Gehäuse (1) nach Anspruch 4, wobei eines von dem ersten und zweiten Lagerelement (21, 22) eine Lasche (23) aufweist, die an einem von der wenigstens einen Mittelstrebe (14) und dem Gehäusekörper (2) vorgesehen und mit einem Langloch (29) ausgebildet ist, und das andere von dem ersten und zweiten Lagerelement (21, 22) ein Eingriffselement (31) aufweist, das bei einer Montage der wenigstens einen Mittelstrebe (14) an dem Gehäusekörper (2) in dem Langloch (29) verschiebbar aufgenommen wird.

6. Explosionsgeschütztes Gehäuse (1) nach Anspruch 5, wobei die wenigstens eine Mittelstrebe (14) an jedem Längsende zwei im Wesentlichen L-förmige Laschen (23) aufweist, deren ein Schenkel (24) an jeweils einer Seitenfläche (27) der wenigstens einen Mittelstrebe (14) angebracht ist und deren anderer Schenkel (26) das Langloch (29) aufweist, und wobei an dem Gehäusekörper (2) Eingriffsmittel in Form von Bolzen (31) ausgebildet sind, die jeweils mit einem zugehörigen Langloch (29) zusammenwirken, um die die wenigstens eine Mittelstrebe (14) lose zu lagern und beweglich zu halten.

7. Explosionsgeschütztes Gehäuse (1) nach Anspruch 5 oder 6, wobei jedes Langloch (29) einen einzigen Langlochabschnitt aufweist, der ein offenes Ende aufweist und sich in eine Richtung senkrecht zu der Mittelstrebenspaltfläche (18) erstreckt und der hinreichend breit und lang ausgelegt ist, um eine relative Verschiebung zwischen dem Langloch (29) und dem zugehörigen Eingriffsmittel (31) zu ermöglichen.

8. Explosionsgeschütztes Gehäuse (1) nach Anspruch 5 oder 6, wobei jedes Langloch (29) zwei oder mehrere Langlochabschnitte (29a-29c) aufweist, die unter Ausbildung einer Biegung miteinander verbunden sind und die jeweils hinreichend breit und lang ausgelegt sind, um eine relative Verschiebung zwischen dem Langloch (29) und dem zugehörigen Eingriffsmittel (31) zu ermöglichen.

9. Explosionsgeschütztes Gehäuse (1) nach Anspruch 8, wobei jedes Langloch (29) einen ersten Langlochabschnitt (29a), der senkrecht zu der Mittelstrebenspaltfläche (18) ausgerichtet ist und ein offenes Ende aufweist, einen zweiten Langlochabschnitt (29b), der zu dem ersten Langlochabschnitt (29a) parallel und versetzt angeordnet ist, und einen dritten Langlochabschnitt (29c) aufweist, der den ersten Langlochabschnitt (29a) mit dem zweiten Langlochabschnitt (29b) verbindet.

10. Explosionsgeschütztes Gehäuse (1) nach einem der vorhergehenden Ansprüche, wobei eine Spanneinrichtung (34) vorgesehen und eingerichtet ist, um die Deckel (32) an dem Gehäusekörper (2) und der wenigstens einen Mittelstrebe (14) festzuspannen und festzuhalten und die zünddurchschlagsicheren Spalte (41, 42; 52, 53) aufrechtzuerhalten.

11. Explosionsgeschütztes Gehäuse (1) nach Anspruch 10, wobei die wenigstens eine Mittelstrebe (14) derart an dem Gehäusekörper (2) lose gelagert ist, dass sie durch Festspannen der Deckel (32) an der wenigstens einen Mittelstrebe (14) mittels der Spanneinrichtung (34) zu den Deckeln (32) hin gezogen wird, um die Mittelstrebenspaltfläche (18) mit einer Gegenanlagefläche (39, 47) an den Deckeln (32) oder einem zwischen der Mittelstrebe (14) und den Deckeln (32) eingefügten Zwischenrahmen (43) in Anlage und mit der umlaufenden Gehäusespaltfläche (13) in gleiche Ebene zu bringen.

12. Explosionsgeschütztes Gehäuse (1) nach einem der vorhergehenden Ansprüche, das ferner einen Zwischenrahmen (43) aus einem dünnen, leicht elastischen Blech aufweist, der an dem Gehäusekörper (2) lösbar befestigt ist und der einen Umfangssteg (44), der die Gehäuseöffnung (9) umgibt und unter Ausbildung des ersten zünddurchschlagsicheren Spaltes (41) an der Gehäusespaltfläche (13) anliegt, und wenigstens einen Mittelsteg (46) aufweist, der sich innerhalb des Umfangsstegs (44) erstreckt und die wenigstens eine Mittelstrebe (14) überdeckt und unter Ausbildung des zweiten zünddurchschlagsicheren Spaltes (42) an der wenigstens einen Mittelstrebenspaltfläche (18) anliegt, wobei zwischen jedem Deckel (32) und dem Zwischenrahmen (43) ein weiterer zünddurchschlagsicherer Spalt (52, 53) gebildet ist.

13. Explosionsgeschütztes Gehäuse (1) nach Anspruch 12, wobei der Zwischenrahmen (43) eine Dicke von weniger als 10 mm, vorzugsweise weniger als 5 mm, aufweist.

14. Explosionsgeschütztes Gehäuse (1) nach Anspruch 12 oder 13, wobei eine Spanneinrichtung (34) vorgesehen und eingerichtet ist, um den Zwischenrahmen (43) in Anlage an dem Gehäusekörper (2) und der wenigstens einen Mittelstrebe (14) festzuspannen und festzuhalten und den zünddurchschlagsicheren Spalt (41, 42) dazwischen aufrechtzuerhalten und die Deckel (32) in Anlage an dem Umfangssteg (44) und dem wenigstens einen Mittelsteg (46) des Zwischenrahmens (43) festzuspannen und festzuhalten und den zünddurchschlagsicheren Spalt (52, 53) dazwischen aufrechtzuerhalten, wobei die Spannrichtung (34) Spannmittel (36) aufweist, die zum festen Fixieren sowohl des Zwischenrahmens (43) als auch des jeweiligen Deckels (32) dienen.

## Claims

1. An explosion-proof housing (1), in particular housing of the "flameproof enclosure" type of protection, comprising:
a housing body (2) defining an interior space (3) and having a housing opening (9) providing access to the interior space (3), the housing body (2) having a circumferential housing gap surface (13) surrounding the housing opening (9);
at least one middle strut (14) which can be detachably mounted on the housing body (2) so that it can be removed from the housing body (2), the at least one middle strut (14) being loosely supported on the housing body (2) in the mounted state, the at least one middle strut (14) having at least one middle strut gap surface (18) and
at least two separate lids (32) which are configured and arranged to be secured in each case in the closed state to the housing body (2) in such a way that flameproof gaps (41, 42; 52, 53) are formed between the lids (32) and the housing body (2) at the circumferential housing gap surface (13);
**characterized in that**
the detachable middle strut (14) extends in the mounted state between sections of the circumferential housing gap surface (13) and divides the housing opening (9) into at least two opening sections (9a, 9b);
the separate lids (32) are each configured and arranged to be secured in the closed state to the middle strut (14); and
flameproof gaps (41, 42; 52, 53) are formed between the lids (32) and the middle strut (14) at the at least one middle strut gap surface (18).

2. The explosion-proof housing (1) according to claim 1, wherein the circumferential housing gap surface (13) defines a first (41) of the flameproof gaps (41, 42; 52, 53) and the at least one middle strut gap surface (18) defines a second (42) of the flameproof gaps (41, 42; 52, 53), wherein the first and second flameproof gaps (41, 42) are flat gaps lying in a common plane.

3. The explosion-proof housing (1) according to claim 1 or 2, wherein the at least one middle strut (14) is arranged to be loosely supported and movably retained on the housing body (2), and no fixing means is provided for directly securing the at least one middle strut (14) to the housing body (2).

4. The explosion-proof housing (1) according to any one of the preceding claims, comprising a bearing device (20) for loosely supporting and movably retaining the at least one middle strut (14) on the housing body (2), the bearing device (20) comprising a first bearing member (21) on the middle strut (14) and a second bearing member (22) cooperating therewith on the housing body (2).

5. The explosion-proof housing (1) according to claim 4, wherein one of the first and second bearing members (21, 22) comprises a tab (23) provided on one of the at least one middle strut (14) and the housing body (2) and formed with an elongated hole (29), and the other of the first and second bearing members (21, 22) comprises an engagement member (31) slidably received in the elongated hole (29) upon assembly of the at least one middle strut (14) to the housing body (2).

6. The explosion-proof housing (1) according to claim 5, wherein the at least one middle strut (14) comprises at each longitudinal end two substantially L-shaped tabs (23), one leg (24) of which is attached to a respective side surface (27) of the at least one middle strut (14) and the other leg (26) of which comprises the elongated hole (29), and wherein engagement means in the form of bolts (31) are formed on the housing body (2), each of which cooperates with an associated elongated hole (29) in order to loosely support and movably retain the at least one middle strut (14).

7. The explosion-proof housing (1) according to claim 5 or 6, wherein each elongated hole (29) comprises a single elongated hole section having an open end and extending in a direction perpendicular to the middle strut gap surface (18), and which is configured to be sufficiently wide and long to allow for relative displacement between the elongated hole (29) and the associated engagement means (31).

8. The explosion-proof housing (1) according to claim 5 or 6, wherein each elongated hole (29) comprises two or more elongated hole sections (29a-29c) joined together to form a bend and each of which designed with sufficient width and length to allow for relative displacement between the elongated hole (29) and the associated engagement means (31).

9. The explosion-proof housing (1) according to claim 8, wherein each elongated hole (29) comprises a first elongated hole section (29a) aligned perpendicular to the middle strut gap surface (18) and having an open end, a second elongated hole section (29b) arranged parallel to and offset from the first elongated hole section (29a), and a third elongated hole section (29c) connecting the first elongated hole section (29a) to the second elongated hole section (29b).

10. The explosion-proof housing (1) according to any one of the preceding claims, wherein a tensioning mechanism (34) is provided and arranged to tighten and hold on the lids (32) to the housing body (2) and the at least one middle strut (14) and to maintain the flameproof gaps (41, 42; 52, 53) .

11. The explosion-proof housing (1) according to claim 10, wherein the at least one middle strut (14) is loosely supported on the housing body (2) in such a way that it is pulled towards the lids (32) by tensioning the lids (32) to the at least one middle strut (14) by means of the tensioning mechanism (34) in order to bring the middle strut gap surface (18) into contact with a mating contact surface (39, 47) on the lids (32) or an intermediate frame (43) interposed between the middle strut (14) and the lids (32) and into the same plane with the circumferential housing gap surface (13).

12. The explosion-proof housing (1) according to any one of the preceding claims, further comprising an intermediate frame (43) made of a thin, slightly elastic sheet metal, which is detachably fastened to the housing body (2) and which comprises a circumferential web (44) surrounding the housing opening (9) and resting against the housing gap surface (13) forming the first flameproof gap (41), and at least one middle web (46) which extends inside the circumferential web (44) and covers the at least one middle strut (14) and rests against the at least one middle strut gap surface (18), forming the second flameproof gap (42), wherein a further flameproof gap (52, 53) is formed between each lid (32) and the intermediate frame (43).

13. The explosion-proof housing (1) according to claim 12, wherein the intermediate frame (43) has a thickness of less than 10 mm, preferably less than 5 mm.

14. The explosion-proof housing (1) according to claim 12 or 13, wherein a tensioning mechanism (34) is provided and arranged to tighten and hold on the intermediate frame (43) in contact with the housing body (2) and the at least one middle strut (14) and to maintain the flameproof gap (41, 42) therebetween and to tighten and hold on the lids (32) in contact with the circumferential strut (44) and the at least one middle web (46) of the intermediate frame (43) and to maintain the flameproof gap (52, 53) therebetween, wherein the tensioning mechanism (34) comprises tensioning means (36) serving to firmly fix both the intermediate frame (43) and the respective lid (32).

## Revendications

1. Boîtier antidéflagrant (1), en particulier boîtier du type de protection « blindage résistant à la pression »,
comprenant un corps de boîtier (2) qui délimite un espace intérieur (3) et présente une ouverture de boîtier (9) qui donne accès à l'espace intérieur (3), le corps de boîtier (2) présentant une surface de joint de boîtier (13) périphérique qui entoure l'ouverture de boîtier (9) ;
comprenant au moins un renfort central (14) qui peut être monté de façon amovible sur le corps de boîtier (2), de sorte qu'il peut être retiré du corps de boîtier (2), le renfort central (14), au nombre d'au moins un, étant monté librement sur le corps de boîtier (2) à l'état assemblé, le renfort central (14), au nombre d'au moins un, présentant au moins une surface de joint de renfort central (18) ; et
comprenant au moins deux couvercles (32) séparés qui sont conçus et disposés de manière à être chacun fixés à l'état fermé sur le corps de boîtier (2), de telle sorte que des fentes antidéflagrantes (41, 42 ; 52, 53) soient formées sur la surface de joint de boîtier (13) périphérique, entre les couvercles (32) et le corps de boîtier (2) ;
**caractérisé en ce que**
à l'état assemblé, le renfort central (14) amovible s'étend entre des portions de la surface de joint de boîtier (13) périphérique et divise l'ouverture de boîtier (9) en au moins deux parties d'ouverture (9a, 9b) ;
les couvercles (32) séparés sont chacun conçus et disposés pour être fixés au renfort central (14), à l'état fermé ; et
des fentes antidéflagrantes (41, 42 ; 52, 53) sont formées sur la surface de joint de renfort central (18), au nombre d'au moins une, entre les couvercles (32) et le renfort central (14).

2. Boîtier antidéflagrant (1) selon la revendication 1, dans lequel la surface de joint de boîtier (13) périphérique définit une première (41) des fentes antidéflagrantes (41, 42 ; 52, 53), et la surface de joint de renfort central (18), au nombre d'au moins une, définit une deuxième (42) des fentes antidéflagrantes (41, 42 ; 52, 53), les première et deuxième fentes antidéflagrantes (41, 42) étant des fentes plates qui se situent dans un même plan.

3. Boîtier antidéflagrant (1) selon la revendication 1 ou 2, dans lequel le renfort central (14), au nombre d'au moins un, est conçu pour être monté librement et tenu de manière mobile sur le corps de boîtier (2), et il n'est pas prévu de moyens de fixation pour le maintien direct du renfort central (14), au nombre d'au moins un, sur le corps de boîtier (2).

4. Boîtier antidéflagrant (1) selon une des revendications précédentes, qui est prévu un dispositif de support (20) pour le support libre et le maintien mobile du renfort central (14), au nombre d'au moins un, sur le corps de boîtier (2), le dispositif de support (20) présentant un premier élément de support (21) sur le renfort central (14) et un deuxième élément de support (22), coopérant avec celui-ci, sur le corps de boîtier (2).

5. Boîtier antidéflagrant (1) selon la revendication 4, dans lequel l'un des premier et deuxième éléments de support (21, 22) présente une patte (23) qui est prévue sur l'un des éléments parmi le renfort central (14), au nombre d'au moins un, et le corps de boîtier (2) et est réalisée avec un trou oblong (29), et l'autre des premier et deuxième éléments de support (21, 22) présente un élément de prise (31) qui est accueilli de manière coulissante dans le trou oblong (29) lors d'un montage du renfort central (14), au nombre d'au moins un, sur le corps de boîtier (2).

6. Boîtier antidéflagrant (1) selon la revendication 5, dans lequel le renfort central (14), au nombre d'au moins un, présente à chaque extrémité longitudinale deux pattes (23) sensiblement en forme de L dont une branche (24) est fixée respectivement à une face latérale (27) du renfort central (14), au nombre d'au moins un, et dont l'autre branche (26) présente le trou oblong (29), et dans lequel des moyens de prise sont réalisés sous forme de goujons (31) sur le corps de boîtier (2), qui coopèrent respectivement avec un trou oblong (29) associé pour monter librement et tenir de façon mobile le renfort central (14), au nombre d'au moins un.

7. Boîtier antidéflagrant (1) selon la revendication 5 ou 6, dans lequel chaque trou oblong (29) présente une portion de trou oblong unique qui comporte une extrémité ouverte et s'étend dans une direction perpendiculaire à la surface de joint de renfort central (18), et qui est suffisamment large et longue pour permettre un déplacement relatif entre le trou oblong (29) et le moyen de prise (31) associé.

8. Boîtier antidéflagrant (1) selon la revendication 5 ou 6, dans lequel chaque trou oblong (29) présente deux ou plusieurs portions de trou oblong (29a à 29c) qui sont reliées entre elles en formant une courbure et qui sont chacune suffisamment larges et longues pour permettre un déplacement relatif entre le trou oblong (29) et le moyen de prise (31) associé.

9. Boîtier antidéflagrant (1) selon la revendication 8, dans lequel chaque trou oblong (29) présente une première portion de trou oblong (29a) qui est orientée perpendiculairement à la surface de joint de renfort central (18) et présente une extrémité ouverte ; une deuxième portion de trou oblong (29b) qui est disposée parallèlement et de façon décalée par rapport à la première portion de trou oblong (29a) ; et une troisième portion de trou oblong (29c) qui relie la première portion de trou oblong (29a) à la deuxième portion de trou oblong (29b).

10. Boîtier antidéflagrant (1) selon une des revendications précédentes, dans lequel un dispositif de serrage (34) est prévu et conçu pour serrer et maintenir les couvercles (32) sur le corps de boîtier (2) et le renfort central (14), au nombre d'au moins un, et conserver les fentes antidéflagrantes (41, 42 ; 52, 53).

11. Boîtier antidéflagrant (1) selon la revendication 10, dans lequel le renfort central (14), au nombre d'au moins un, est monté librement sur le corps de boîtier (2) de manière à ce qu'il soit tiré en direction des couvercles (32) par serrage des couvercles (32) sur le renfort central (14), au nombre d'au moins un, à l'aide du dispositif de serrage (34), en vue d'amener la surface de joint de renfort central (18) en appui contre une surface d'appui antagoniste (39, 47) des couvercles (32) ou un cadre intermédiaire (43) inséré entre le renfort central (14) et les couvercles (32), et de l'amener dans un même plan avec la surface de joint de boîtier (13) périphérique.

12. Boîtier antidéflagrant (1) selon une des revendications précédentes, qui présente en outre un cadre intermédiaire (43) en tôle mince légèrement élastique, qui est fixé de manière amovible au corps de boîtier (2) et qui présente une aile périphérique (44), entourant l'ouverture de boîtier (9) et appliquée contre la surface de joint de boîtier (13), et au moins une aile centrale (46) qui s'étend à l'intérieur de l'aile périphérique (44) et recouvre le renfort central (14), au nombre d'au moins un, et est appliquée contre la surface de joint de renfort central (18), au nombre d'au moins une, en formant la deuxième fente antidéflagrante (42), sachant qu'une autre fente antidéflagrante (52, 53) est formée entre le couvercle (32) et le cadre intermédiaire (43).

13. Boîtier antidéflagrant (1) selon la revendication 12, dans lequel le cadre intermédiaire (43) présente une épaisseur inférieure à 10 mm, de préférence inférieure à 5 mm.

14. Boîtier antidéflagrant (1) selon la revendication 12 ou 13, dans lequel un dispositif de serrage (34) est prévu et conçu pour serrer et maintenir le cadre intermédiaire (43) en appui contre le corps de boîtier (2) et le renfort central (14), au nombre d'au moins un, et conserver la fente antidéflagrante (41, 42) entre eux et pour serrer et maintenir les couvercles (32) en appui contre l'aile périphérique (44) et l'aile centrale (46), au nombre d'au moins une, du cadre intermédiaire (43) et conserver la fente antidéflagrante (52, 53) entre eux, la direction de serrage (34) présentant des moyens de serrage (36) qui servent à fixer solidement aussi bien le cadre intermédiaire (43) que le couvercle (32) respectif.
